(19) Europäisches Patentamt

European Patent Office

Office européen des brevets

(11) **EP 3 259 764 B1**

(12) **EUROPEAN PATENT SPECIFICATION**

(45) Date of publication and mention
of the grant of the patent:
**28.07.2021 Bulletin 2021/30**

(21) Application number: **16706405.4**

(22) Date of filing: **17.02.2016**

(51) Int Cl.:
*H01B 7/18* (2006.01)     *G02B 6/44* (2006.01)
*H01B 7/28* (2006.01)     *H01B 7/14* (2006.01)

(86) International application number:
**PCT/GB2016/050398**

(87) International publication number:
**WO 2016/132128 (25.08.2016 Gazette 2016/34)**

(54) **RESILIENT CABLE**

ELASTISCHES KABEL

CÂBLE ÉLASTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.02.2015 GB 201502707**

(43) Date of publication of application:
**27.12.2017 Bulletin 2017/52**

(73) Proprietor: **Kinectrics UK Limited
Surrey Research Park
Guildford
Surrey GU2 7YD (GB)**

(72) Inventors:
• **STEVENS, Gary
Guildford
Surrey GU2 7YD (GB)**

• **RHODES, Rhys
Guildford
Surrey GU2 7YD (GB)**

(74) Representative: **Petty, Catrin Helen et al
Venner Shipley LLP
200 Aldersgate
London EC1A 4HD (GB)**

(56) References cited:
WO-A1-2010/104538     WO-A1-2015/014386
CN-U- 204 155 638     DE-A1- 1 515 709
US-A- 3 710 007

**Description**

The present invention relates to resilient cables, their uses and to methods of manufacturing such cables. More in particular, the invention relates to an electrical power cable and a method for manufacturing such an electrical power cable.

There is a recognised need in energy distribution networks for extruded polymeric cables to be resilient against defects. At present, cables which are not resilient often develop small defects in their protective outer sheath during manufacture and installation. These defects are often minor and are difficult to readily detect but, over time, minor defects may develop into major defects permitting water and oxygen to penetrate the cable, causing degradation that can eventually lead to cable failure. Additionally, cables which are not resilient will often sustain more significant damage during operation from civil engineering works for on-shore cables in their immediate environment. This damage can be caused either indirectly, such as through vibrations (i.e. drilling), or directly, such as through mishaps involving earth-moving equipment and hand operations.

Similar problems are encountered where cables which are not resilient are used in undersea applications. For instance, cables can be damaged due to being impacted by anchors or the nets of fishing trawlers. If the protective outer sheath is breached, seawater can quickly penetrate the cable, which can result in cable failure.

Once installed, power cables are often physically inaccessible, for instance they may be located underground or on the sea floor. For this reason the development of defects will likely go unnoticed until failure occurs. Incorporating a tough layer into cables capable of preventing minor defects forming or developing into major defects and thereby causing the eventual failure of the cable will extend the operational lifetime of the cable, and reduce the costs incurred due to cable outage and the need to replace failed cables.

WO 2015/014386 A is concerned with an optical cable for a terrestrial network. In particular, WO 2015/014386 A discloses an optical cable comprising an optical core and an external sheath surrounding the core. The external sheath comprises a first material having a first, higher fracture toughness and a second material having a second, lower fracture toughness. The first and second materials are arranged so that the second, lower fracture toughness material is accessible from outside the cable along at least one longitudinally extending area of the sheath outer surface. For accessing the optical core of the cable, a short longitudinal cut is made with a blade in the accessible second, lower fracture toughness material. Then, its cut edges are pulled apart by hand. The pulling force causes the lower fracture toughness material to fracture, thereby propagating the initial short cut longitudinally along the sheath through its whole thickness.

US 3,710,007 describes an electrical conducting cable for submersible motors adapted for use in high temperature, high pressure oil wells. The cable includes separately insulated conductors disposed within an epichlorohydrin rubber jacket. The conductors are insulated with a layer of high temperature, high molecular weight, heat stabilized polypropylene as the primary insulation. The jacketed cable unit is protected by an outer armour formed of a high temperature, high molecular weight, heat stabilized, polypropylene.

In accordance with a first aspect of the invention, there is provided an electrical power cable according to claim 1, the electrical power cable comprising:

> a core comprising a conductive material; and
> a resilient external layer surrounding the core, wherein the resilient external layer comprises:

>> a compliant layer having a shear loss modulus of at least 0.3 MPa at 296 K; and
>> a tough layer (61, 65), disposed surrounding the compliant layer (60, 64), wherein the tough layer has a fracture toughness of at least 1 MPa m½ at 296 K

> characterised in that the cable comprises a self-healing layer extruded around and surrounding the core.

Further developments of the invention are the subject of the dependent claims.

Advantageously, due to the surprising synergistic combination of the tough layer and the compliant layer, the cable undergoes rapid or slow mechanical deformation without defects forming. This effect is not only due to the strength of the tough layer but also due to the compliant layer disposed directly next to the tough layer which absorbs the energy of deformation due to its mechanical loss characteristics and lowers mechanical stress due to the deformation of the compliant layer.

In one embodiment, the compliant layer is attached or connected to the tough layer. The compliant layer maybe disposed adjacent to and bonded to the tough layer.

Alternatively, in another embodiment a transition layer may be disposed between the tough layer and the compliant layer. Accordingly, the transition layer may be disposed adjacent to and surrounding the compliant layer, and the tough layer maybe disposed adjacent to and surrounding the transition layer. The transition layer may be bonded to both the compliant layer and the tough layer. The material properties of the transition layer may fall between the properties of the compliant layer and the tough layer. The transition layer may comprise a material sold under the trade mark IROGRAN® D 60 E4024, Desmopan® or Hytrel® 8238.

Advantageously, the bonding of the compliant layer to the tough layer, or the bonding of both the compliant layer and tough layer to the transition layer, would prevent the interfacial transport of water along the length of the cable between the compliant layer and tough layer in the unlikely event that a defect formed in the tough layer.

However, in a further embodiment the tough layer is disposed adjacent to and surrounds the compliant layer and the tough layer is not bonded to the compliant layer.

Advantageously, this will allow the tough layer to slip over the compliant layer and prevent stress from being transferred between the layers.

Preferably, the compliant layer is extruded around the core. Preferably, the tough layer is extruded around the compliant layer. In embodiments where one is present, the transition layer may be extruded around the compliant layer and the tough layer is extruded around the transition layer.

It will be understood that the thickness of the layers should be selected to ensure that the tough layer can effectively resist externally applied forces and transmit these to the compliant layer without fracturing and that the compliant layer can effectively redistribute due to deforming.

Preferably, the tough layer has a Shore D hardness of at least 60, 65, or 70 at about 296 K. More preferably, the tough layer has a Shore D hardness of greater than 75, 80, or 85 at about 296 K. In embodiments where one is present, the transition layer may have a Shore D hardness which is less than 85, 80, 75, 70, 65, or 60 at about 296 K.

Preferably, the tough layer has a tensile modulus of at least 200 MPa at about 296 K. More preferably, the tough layer has a tensile modulus of at least 250, 500 or 750 MPa at about 296 K. Most preferably, the tough layer has a tensile modulus of at least 1000, 2500 or 5000 MPa at about 296 K. In embodiments where one is present, the transition layer may have a tensile modulus which is less than 5000, 2500, 1000, 750, 500 or 200 MPa at about 296 K.

Preferably, the tough layer has a bulk modulus of at least 300 MPa at about 296 K. More preferably, the tough layer has a bulk modulus of at least 500, 1000 or 2000 MPa at about 296 K. Most preferably, the tough layer has a bulk modulus of at least 3000, 5000, 10000 or 20000 MPa at about 296 K. In embodiments where one is present, the transition layer may have a bulk modulus which is less than 20000, 10000, 5000, 3000, 2000, 1000, 500 or 300 MPa at about 296 K.

Preferably, the tough layer has a shear modulus of at least 5 MPa at about 296 K. More preferably, the tough layer has a shear modulus of at least 50, 100 or 200 MPa at about 296 K. Most preferably, the tough layer has a shear modulus of at least 250, 500 or 1000 MPa at about 296 K. In embodiments where one is present, the transition layer may have a shear modulus which is less than 1000, 500, 250, 200, 100, 50 or 5 MPa at about 296 K.

Preferably, the tough layer has a fracture toughness of at least 2 MPa m½ at about 296 K. More preferably, the tough layer has a fracture toughness of at least 3 MPa m½ at about 296 K. Most preferably, the tough layer has a fracture toughness of at least 4 MPa m½ at about 296 K.

Preferably, the tough layer has a bulk compliance of less than 0.07 MPa$^{-1}$ at about 296 K. More preferably, the tough layer has a bulk compliance of less than 0.01, 0.005, 0.001, 0.0005 or 0.0001 MPa$^{-1}$ at about 296 K. In embodiments where one is present, the transition layer may have a bulk compliance of at least 0.0001, 0.0005, 0.001, 0.005, 0.01 or 0.07 MPa$^{-1}$ at about 296 K.

Preferably, the compliant layer has a Shore D hardness of less than 50, 40, 35 or 30 at about 296 K. Preferably, the compliant layer has a Shore D hardness of less than 25, 20 or 15 at about 296 K. In embodiments where one is present, the transition layer may have a Shore D hardness which is at least 15, 20, 25, 30, 35, 40 or 50 at about 296 K.

Preferably, the compliant layer has a Shore A hardness of 100 or less at about 296 K. Preferably, the compliant layer has a Shore A hardness 95, 90 or 85 or less at about 296 K. More preferably the compliant layer has a Shore A hardness 80, 75 or 70 or less at about 296 K. In embodiments where one is present, the transition layer may have a Shore A hardness which is at least 70, 75, 80, 85, 90 or 95 at about 296 K.

Preferably, the compliant layer has a tensile modulus of 500 MPa or less at about 296 K. More preferably, the compliant layer has a tensile modulus of 400, 300, 200 or 100 MPa or less at about 296 K. Most preferably, the compliant layer has a tensile modulus of 50, 40, 30, 20 or 10 MPa or less at about 296 K. In embodiments where one is present, the transition layer may have a tensile modulus which is greater than 10, 20, 30, 40, 50, 100, 200, 300, 400 or 500 MPa at about 296 K.

Preferably, the compliant layer has a bulk modulus of 3000 MPa or less at about 296 K. More preferably, the compliant layer has a bulk modulus of 2000, 1000 or 500 MPa or less at about 296 K. Most preferably, the compliant layer has a bulk modulus of 200, 150, 100 or 50 MPa or less at about 296 K. In embodiments where one is present, the transition layer may have a tensile modulus which is greater than 50, 100, 150, 200, 500, 1000, 2000 or 3000 MPa at about 296 K.

Preferably, the compliant layer has a shear modulus of 200 MPa or less at about 296 K. More preferably, the compliant layer has a shear modulus of 100, 50, or 25 MPa or less at about 296 K. Most preferably, the compliant layer has a tensile modulus of 20, 10 or 5 MPa or less at about 296 K. In embodiments where one is present, the transition layer may have a shear modulus which is greater than 5, 10, 20, 25, 50, 100 or 200 MPa at about 296 K.

Preferably, the compliant layer has a shear loss modulus of at least 0.4 at about 296 K. More preferably, the compliant layer has a shear loss modulus of at least 0.5 or 0.6 at about 296 K. Most preferably, the compliant layer has a shear loss modulus of at least 0.7 at about 296 K.

Preferably, the compliant layer has a bulk compliance of at least 0.0001 MPa$^{-1}$ at about 296 K. More preferably, the compliant layer has a bulk compliance of at least 0.0005, 0.001, 0.005 or 0.01 MPa$^{-1}$ at about 296 K. In embodiments where one is present, the transition layer may have a bulk compliance of less than 0.01, 0.005, 0.001, 0.0005 or 0.0001 MPa$^{-1}$ at about 296 K.

In embodiments where one is present, the transition layer may have a Shore D hardness which is between 15 and 85, 25 and 85, 30 and 85, 40 and 85 or 50 and 85. Alternatively, the transition layer may have a Shore D hardness which is between 15 and 80, 15 and 75, 15 and 70, 15 and 65 or 15 and 60. Alternatively, the transition layer may have a Shore D hardness which is between 20 and 75, 30 and 70, 40 and 65 or 50 and 60.

In embodiments where one is present, the transition layer may have a tensile modulus which is between 10 and 5000, 20 and 5000, 30 and 5000, 40 and 5000, 50 and 5000, 100 and 5000, 200 and 5000, 300 and 5000, 400 and 5000 or 500 and 5000 MPa at about 296 K. Alternatively, the transition layer may have a tensile modulus which is between 10 and 2500, 10 and 1000, 10 and 750, 10 and 500 or 10 and 200 MPa at about 296 K. Alternatively, the transition layer may have a tensile modulus which is between 30 and 2500, 50 and 1000, 200 and 750, or 400 and 500 MPa at about 296 K.

In embodiments where one is present, the transition layer may have a bulk modulus which is between 50 and 20000, 50 and 10000, 50 and 5000, 50 and 3000, 50 and 2000, 50 and 1000, 50 and 500 or 50 and 300 MPa at about 296 K. Alternatively, the transition layer may have a bulk modulus which is between 50 and 20000, 100 and 20000, 150 and 20000, 200 and 20000, 500 and 20000, 1000 and 20000, 2000 and 20000 or 3000 and 20000 MPa at about 296 K. Alternatively, the transition layer may have a bulk modulus which is between 50 and 20000, 100 and 10000, 150 and 5000, 200 and 3000, 500 and 2000, or 500 and 1000 MPa at about 296 K.

In embodiments where one is present, the transition layer may have a shear modulus which is between 5 and 1000, 10 and 1000, 20 and 1000, 25 and 1000, 50 and 1000, 100 and 1000 or 200 and 1000 MPa at about 296 K. Alternatively, the transition layer may have a shear modulus which is between 5 and 500, 5 and 250, 5 and 200, 5 and 100, or 5 and 50 MPa at about 296 K. Alternatively, the transition layer may have a shear modulus which is between 10 and 500, 20 and 250, 25 and 200, or 50 and 100 MPa at about 296 K.

In embodiments where one is present, the transition layer may have a bulk compliance of between 0.0001 and 0.01, 0.0001 and 0.005, 0.0001 and 0.001, or 0.0001 and 0.0005 MPa$^{-1}$ at about 296 K. Alternatively, the transition layer may have a bulk compliance of between 0.0005 and 0.01, 0.001 and 0.01, 0.005 and 0.01.

In one embodiment, the resilient external layer forms a dry composite structure, which is configured not to allow water to pass therethrough. In an alternative embodiment, the resilient external layer may form a wet composite structure, which is configured to allow water to pass therethrough.

It may be appreciated that the cable is a self-repairing cable.

The term "self-repairing cable" can mean that at least a portion of the cable is capable of repairing itself after it has been damaged without the need for input from a user. The term "self-healing layer" can mean that the layer comprises a material capable of closing a defect which has formed therein without the need for input from a user and without the materials, which form the self-healing layer, undergoing an irreversible chemical reaction.

Advantageously, since the materials which form the self-healing layer do not undergo any irreversible chemical reactions, the self-healing layer is capable of self-healing multiple times and is therefore able to protect the core of the cable from repeated damage inflicted on the cable. This prevents major defects from forming in the cable, which would otherwise eventually penetrate to the core and ultimately result in the failure of the cable.

In one embodiment, the tough layer is a self-healing layer. In another embodiment, the compliant layer is a self-healing layer. In embodiments where one is present, the transition layer is a self-healing layer. In another embodiment, the self-healing layer comprises a separate layer to the resilient and compliant layers.

Preferably, the tough layer comprises a thermoplastic material. Preferably, the thermoplastic material has high toughness, hardness and mechanical moduli. Preferably, the tough layer comprises high density polyethylene, polypropylene, poly(oxymethylene), or a material sold under the trade name, Hytel® 8238 or IROGRAN® D 60 E4024.

In embodiments where the tough layer is self-healing, it may comprise a supramolecular polymer or a shape memory polymer.

In embodiments where the resilient external layer forms a dry composite structure, the compliant layer may comprise a rubber, thermoset, elastomer, thermoplastic elastomer, or a closed cell microcellular foamed thermoplastic elastomer. Preferably, the compliant layer comprises a soft material with low moduli and high loss. Examples of suitable materials include Vamac® ethylene acrylic elastomer, Therban®, Hytemp®, Desmopan®, thermoset polyurethane, Silastic®, Aflas®, Viton® or Tecnoflon®.

In embodiments where the compliant layer is self-healing, it may comprise a hydrophilic thermoplastic elastomer.

In embodiments where the tough layer and the compliant layer form a wet composite structure, the compliant layer may comprise an open cell microcellular foamed thermoplastic elastomer. Preferably, the compliant layer comprises Vamac® ethylene acrylic elastomer, Therban®, Hytemp®, Desmopan®, thermoset polyurethane, Silastic®, Aflas®, Viton® or Tecnoflon®.

In one embodiment, the self-healing layer may comprise a dry self-healing layer, wherein no part of the dry self-healing layer is exposed to water during normal use of an undamaged cable.

In another embodiment, the self-healing layer may comprise a wet self-healing layer, wherein the wet self-healing layer comprises an outer surface at least a portion of which is exposed to water during normal use of an undamaged cable.

The dry self-healing layer may comprise a water-swelling material, a supramolecular matrix and/or a shape memory polymer (SMP).

In one embodiment, the dry self-healing layer comprises a supramolecular matrix incorporating a plurality of particles therein, wherein the particles comprise a water swelling material. In a preferred embodiment, however, the dry self-healing layer comprises first and second sub-layers, wherein the first sub-layer comprises a water swelling material and the second sub layer comprises a supramolecular matrix. Preferably, the first sub-layer is closer to the core than the second sub-layer, and the first sub-layer is surrounded by the second sub layer.

The wet self-healing layer may comprise a supramolecular matrix and/or a shape memory polymer (SMP). Optionally, the wet self-healing layer may also comprise a water-swelling material.

In a preferred embodiment, the wet self-healing layer comprises first and second sub-layers, wherein the first sub-layer comprises a water swelling material and the second sub-layer comprises a supramolecular matrix. Preferably, the first sub-layer is closer to the core than a second sub-layer, and the first sub-layer is surrounded by the second sub-layer.

The water swelling material may comprise a water swelling thermoplastic elastomer (TPE) or a water swelling rubber. The water swelling TPE may comprise a polymer that is capable of forming a thermoplastic matrix, and a hydrophilic additive. For example, the polymer may comprise poly(styrene-block-butadiene-block-styrene) or poly(styrene-block-ethene-co-butane-block-styrene), or poly(styrene-block-ethylene-co-butylene-block-styrene). The hydrophilic additive may comprise one or more hydrophilic side chain grafted onto the polymer. Preferably, the hydrophilic side chain comprises poly(acrylic acid), maleic acid or sodium polyacrylate. Alternatively or additionally, the hydrophilic additive may comprise a second polymer, wherein the second polymer is a non-bonded water swellable polymer which is not bonded to the first polymer. The second polymer may comprise poly(acrylic acid) or sodium poly(acrylic acid).

The water swelling rubber may comprise a rubber matrix and a hydrophilic additive. The rubber matrix may comprise a natural rubber. The hydrophilic additive may comprise one or more hydrophilic side chain grafted onto the rubber. The hydrophilic additive may comprise poly(acrylic acid), maleic acid or sodium polyacrylate.

The supramolecular matrix may comprise molecules capable of forming labile bonds, for example at least one of hydrogen bonds, $\pi$-stacking, or ionic bonds. Preferred molecules may comprise a polyolefin (such as polyethylene (PE), polypropropylene (PP), an ethylene copolymer, an olefin polymer blend), a polyimide, a polyamide, a polyester (such as polyethylene terephthalate (PET) or, polybutylene terephthalate (PBT)) or a poly(styrene-block-butadiene-block-styrene) (SBS) or a poly(styrene-block-ethylene-co-butylene-block-styrene) (SEBS) thermoplastic elastomer containing a self-healing matrix. The self-healing matrix may comprise one or more groups capable of forming labile bonds grafted to the thermoplastic elastomer. Alternatively, the self-healing matrix may comprise a further polymer which is not grafted to the thermoplastic elastomer and is capable of forming labile bonds. Alternatively, the molecule may comprise an ionomeric polymer. The supramolecular matrix may comprise a supramolecular polymer, a supramolecular thermoplastic elastomer or a supramolecular hydrophilic thermoplastic elastomer. The supramolecular polymer, the supramolecular thermoplastic elastomer and/or the supramolecular hydrophilic thermoplastic elastomer may all be either melt or solution processable.

Advantageously, a supramolecular matrix which has self-healed after being damaged will be mechanically similar and in some cases identical to a similar matrix which has not been damaged.

The shape memory polymer (SMP) may comprise a polymeric smart material programmed into the desired shape, wherein if the SMP is deformed then the original shape may be recovered once the shape memory polymer is exposed to a trigger. The trigger may comprise a specific temperature or temperature range, an electrical field, light and/or water. Preferably, the shape memory polymer comprises a thermoplastic polyurethane. Preferably, the shape memory polymer comprises a covalently cross-linked glassy thermoset, such as polynorbornene functionalized with poly-caprolactone and cyano group. Preferably, the shape memory polymer comprises a covalently cross-linked semi-crystalline network, such as a polymer network containing poly(octadecyl vinyl ether)-co-BA. Preferably, the shape memory polymer comprises a physically cross-linked copolymer, such as ethylene oxide-ethylene terephthalate segmented copolymer. Preferably, the shape memory polymer comprises a physically cross-linked semi-crystalline block copolymer, such as polyurethane block copolymers with shape memory effect.

In one embodiment of the present invention the self-healing layer comprises a water-blocking layer, wherein the water-blocking layer is configured to prevent water from passing therethrough. Preferably, the water-blocking layer comprises a water swelling thermoplastic elastomer (TPE), a water swelling rubber and/or a shape memory polymer. In a preferred embodiment, the water-blocking layer comprises a water swelling thermoplastic elastomer (TPE).

Advantageously, a self-healing layer comprising a water-blocking layer would be capable of self repair, thereby preventing any defects from propagating in the cable, and would also prevent water from penetrating past the self-healing layer when no defects are present.

In one embodiment the compliant layer comprises a self-healing layer. In one embodiment the tough layer comprises a self-healing layer.

The cable comprises an electrical power cable. Alternatively, the cable may comprise a power transmission or distribution line, a coaxial single core cable or a triple or multi-core cable.

According to the invention where the cable comprises an electric power cable the core comprises a conductive material, preferably copper or aluminium.

In one preferred embodiment, the cable comprises a single core electrical cable comprising a conductive core, and a resilient external layer surrounding the core. Preferably, the cable comprises an insulating layer. Preferably, the insulating layer is configured to electrically insulate the core. Preferably, the insulating layer is extruded around the core. Preferably, the insulating layer comprises a cross-linked polyethylene. Preferably, the insulating layer surrounds the core and is itself surrounded by the resilient external layer.

Accordingly, it is preferred that the cable comprises a conductive core, an insulating layer which surrounds the conductive core and a resilient external layer which surrounds the insulating layer. Optionally, the insulating layer may be disposed adjacent to the conductive core. Optionally, the resilient external layer may be disposed adjacent to the insulating layer.

The cable may comprise one or more semi-conductive layers which comprise a semi-conductive material. Preferably, the or each semi-conductive layer is extruded around the core. For example, the cable may comprise an inner semi-conductive layer and an outer semi-conductive layer. Preferably, the inner semi-conductive layer is disposed adjacent to and surrounds the core. Preferably, the inner semi-conductive layer is disposed adjacent to and is itself surrounded by the insulating layer. The outer semi-conductive layer is preferably disposed adjacent to and surrounds the insulating layer and is itself surrounded by the resilient external layer. The semi-conductive layer may comprise a carbon-loaded polyethylene, an ethylene copolymer (such as ethylene vinyl acetate (EVA) and ethylene butyl acrylate (EBA)) or a blend thereof. Alternatively or additionally, the semi-conductive layer may comprise a carbon loaded thermoplastic elastomer (TPE) and/or a carbon supramolecular matrix.

Accordingly, it is preferred that the cable comprises a conductive core which is disposed adjacent to and surrounded by an inner semi-conductive layer, an insulating layer which is disposed adjacent to and surrounds the inner semi-conductive layer, an outer semi-conductive layer which is disposed adjacent to and surrounds the insulating layer, and a resilient external layer. Optionally, the resilient external layer may be disposed adjacent to the outer semi-conductive layer. Optionally, the resilient external layer comprises a self healing compliant layer and/or a self healing tough layer.

The cable may comprise a first self-healing layer. Preferably, the first self-healing layer is disposed adjacent to and surrounds the outer semi-conductive layer. Preferably, the first self-healing layer is extruded around the core, and preferably around the outer semi-conductive layer in embodiments where one is present. Preferably, the first self-healing layer is surrounded by the resilient external layer.

Preferably, the first self-healing layer is semi-conductive. Accordingly, the first self-healing layer may comprise a water swelling thermoplastic elastomer (TPE) compounded with a conductive material (such as a small particle fumed or colloidal carbon or graphite). The first self-healing layer may comprise a water swelling thermoplastic elastomer (TPE) comprising between 3 and 6% carbon.

Advantageously, this will allow the first self-healing layer to form stronger bonds with the outer semi-conductive layer if the matrix of the latter is the same as that of he former.

Accordingly, it is preferred that the cable comprises a conductive core which is disposed adjacent to and surrounded by an inner semi-conductive layer, an insulating layer which is disposed adjacent to and surrounds the inner semi-conductive layer, an outer semi-conductive layer which is disposed adjacent to and surrounds the insulating layer, a first self-healing layer which is disposed adjacent to and surrounds the outer semi-conductive layer, and a resilient external layer which surrounds the first self-healing layer. Optionally, the resilient external layer may be disposed adjacent to the first self-healing layer. Optionally, the resilient external layer comprises a self healing compliant layer and/or a self healing tough layer.

The cable may comprise a sheath which is configured to not allow water to pass therethrough. Preferably, the sheath surrounds the insulating layer. Preferably, the sheath is extruded around the core, and preferably around the insulating layer in embodiments where one is present. Preferably, the sheath is disposed adjacent to and surrounds the first self-healing layer, in embodiments where one is present, and preferably the first self-healing layer comprises a dry self-healing layer. Preferably, the sheath is surrounded by the resilient external layer. Preferably, the sheath comprises medium or high density polyethylene (MDPE or HDPE), polypropylene (PP) and/or poly(oxymethylene). Optionally, the sheath comprises inner and outer sheath layers, wherein the inner sheath layer is disposed adjacent to and surrounded by the outer sheath. The outer sheath may comprise medium or high density polyethylene (MDPE or HDPE), polypropylene (PP) and/or poly(oxymethylene) and the inner sheath may comprise lead or aluminium. The lead or aluminium which comprises the inner sheath may be provided in the form of a bonded tape, optionally an edge bonded wrap forming a continuous water barrier.

Accordingly, in another preferred embodiment the cable comprises a conductive core which is disposed adjacent to and surrounded by an inner semi-conductive layer, an insulating layer which is disposed adjacent to and surrounds the inner semi-conductive layer, an outer semi-conductive layer which is disposed adjacent to and surrounds the insulating layer, a first self-healing layer which is disposed adjacent to and surrounds the outer semi-conductive layer, a sheath which is disposed adjacent to and surrounds the first self-healing layer, and a resilient external layer which surrounds the sheath. Optionally, the resilient external layer may be disposed adjacent to the sheath. Optionally, the resilient external layer comprises a self healing compliant layer and/or a self healing tough layer.

The cable may comprise an additional layer which comprises a plurality of wires. The wires may comprise steel wires, which may be filled with bitumen. Preferably, the additional layer surrounds the first self-healing layer, in embodiments where one is present. Additionally, the additional layer preferably is disposed adjacent to and surrounds the sheath, in embodiments where one is present. Additionally, the additional layer preferably is surrounded by the resilient external layer.

Optionally, the cable comprises a bedding layer, which is configured to hold the additional layer in place. The bedding layer may comprise polyvinyl chloride (PVC), an ethylene copolymer (such as ethylene vinyl acetate (EVA) and ethylene butyl acrylate (EBA)), a thermoplastic polyester (such as polybutylene terephthalate (PBT) or polyethylene terephthalate (PET)) and/or a thermoplastic elastomers (TPE). In one preferred embodiment, the bedding layer comprises a self-healing layer comprising water swelling thermoplastic elastomers. Preferably, the bedding is surrounded by and disposed adjacent to the additional layer. Additionally, the bedding layer may be disposed adjacent to and surround the sheath, in embodiments where one is present. Preferably, the bedding layer is extruded around the core, and the sheath in embodiments where one is present.

The bedding layer may possess a Shore B hardness of 50 or less and a Shore A hardness of 100 or less at about 296 K. Preferably, the bedding layer has a tensile modulus of 500 MPa or less at about 296 K. More preferably, the bedding layer has a tensile modulus of 400, 300, 200 or 100 MPa or less at about 296 K. Most preferably, the bedding layer has a tensile modulus of 50, 40, 30, 20 or 10 MPa or less at about 296 K.

Preferably, the bedding layer has a bulk modulus of 3000 MPa or less at about 296 K. More preferably, the bedding layer has a bulk modulus of 2000, 1000 or 500 MPa or less at about 296 K. Most preferably, the bedding layer has a bulk modulus of 200, 150, 100 or 50 MPa or less at about 296 K.

Preferably, the bedding layer has a shear modulus of 200 MPa or less at about 296 K. More preferably, the bedding layer has a shear modulus of 100, 50, or 25 MPa or less at about 296 K. Most preferably, the bedding layer has a shear modulus of 20, 10 or 5 MPa or less at about 296 K.

Accordingly, in yet another preferred embodiment the cable comprises a conductive core which is disposed adjacent to and surrounded by an inner semi-conductive layer, an insulating layer which is disposed adjacent to and surrounds the inner semi-conductive layer, an outer semi-conductive layer which is disposed adjacent to and surrounds the insulating layer, a first self-healing layer which is disposed adjacent to and surrounds the outer semi-conductive layer, a sheath which is disposed adjacent to and surrounds the first self-healing layer, a bedding layer which is disposed adjacent to and surrounds the sheath, an additional layer which is disposed adjacent to and surrounds the bedding layer, and a resilient external layer which is disposed adjacent to and surrounds the additional layer. Optionally, the resilient external layer comprises a self healing compliant layer and/or a self healing tough layer.

Optionally, the single core electrical cable may comprise a metallic screen configured to provide a conducting earth plane or a reference voltage plane to support electrical measurements of the cable and/or an electrical protection function. Preferably, the metallic screen is extruded around the core. The metallic screen may comprise a copper counter helix layer and/or a copper counter screen. Preferably, the metallic screen comprises a copper counter helix layer which is disposed adjacent to and surrounded by a copper counter screen. The metallic screen may surround the insulating layer, and/or the second semi-conductive layer, in embodiments where one is present. The metallic screen may be surrounded by the sheath, in embodiments where one is present. The metallic screen may be surrounded by the first self-healing layer, in embodiments where one is present. However, in a preferred embodiment the first self-healing layer is surrounded by the metallic screen, in embodiments where one is present.

Accordingly, in yet another preferred embodiment the cable comprises a conductive core which is disposed adjacent to and surrounded by an inner semi-conductive layer, an insulating layer which is disposed adjacent to and surrounds the inner semi-conductive layer, an outer semi-conductive layer which is disposed adjacent to and surrounds the insulating layer, a first self-healing layer which is disposed adjacent to and surrounds the outer semi-conductive layer, a metallic screen which is disposed adjacent to and surrounds the first self-healing layer, a sheath which is disposed adjacent to and surrounds the metallic screen, a bedding layer which is disposed adjacent to and surrounds the sheath, an additional layer which is disposed adjacent to and surrounds the bedding layer, and a resilient external layer which is disposed adjacent to and surrounds the additional layer. Optionally, the resilient external layer comprises a self healing compliant layer and/or a self healing tough layer.

Alternatively, in other preferred embodiments, the cable may comprise a plurality of cores, and can be referred to as a multi-core electrical cable. The cable may comprise at least two cores or more preferably at least three cores. As such, the cable may comprise a dual core, a triple core and in some cases a multi-core electrical cable.

Preferably, the cable comprises a plurality of cable elements each comprising a conductive core, and an outer casing comprising the resilient external layer and surrounding the plurality of cable elements. The cable preferably comprises at least one filler and/or at least one optical fibre element, which are also surrounded by the outer casing. Preferably the filler comprises polyvinylchloride (PVC), polyethylene (PE) and/or chlorinated polyethylene. Alternatively or additionally, the filler may comprise a flame retardant inorganic filler, such as magnesium hydroxide and aluminium hydroxide.

Preferably, each cable element comprises an insulating layer. Each cable element may comprise one or more semi-conductive layers. Each cable element may comprise a sheath. Each cable element may comprise a first self-healing layer. Each cable element may comprise a metallic screen. Each of these layers may be as previously defined above.

Accordingly, in one embodiment each cable element comprises a conductive core, an inner semi-conductive layer which is disposed adjacent to and surrounds the conductive core, an insulating layer which is disposed adjacent to and surrounds the inner semi-conductive layer, an outer semi-conductive layer which is disposed adjacent to and surrounds the insulating layer, a metallic screen which is disposed adjacent to and surrounds the outer semi-conductive layer, a first self-healing layer which is disposed adjacent to and surrounds the metallic screen, and a sheath which is disposed adjacent to and surrounds the first self-healing layer.

However, in a preferred embodiment the first self-healing layer is surrounded by the metallic screen. Accordingly, in a preferred embodiment, each cable element comprises a conductive core, an inner semi-conductive layer which is disposed adjacent to and surrounds the conductive core, an insulating layer which is disposed adjacent to and surrounds the inner semi-conductive layer, an outer semi-conductive layer which is disposed adjacent to and surrounds the insulating layer, a first self-healing layer which is disposed adjacent to and surrounds the outer semi-conductive layer, a metallic screen which is disposed adjacent to and surrounds the first self-healing layer, and a sheath which is disposed adjacent to and surrounds the metallic screen.

Preferably, each cable element comprises a second self-healing layer. Preferably, the second self-healing layer is extruded around the core. Preferably, the second self-healing layer comprises a dry self-healing layer. Preferably, the second self-healing layer is disposed adjacent to and surrounds the metallic screen, in embodiments where one is present. Preferably, the second self-healing layer is disposed adjacent to and surrounded by the sheath, in embodiments where one is present.

Accordingly, in a further preferred embodiment, each cable element comprises a conductive core, an inner semi-conductive layer which is disposed adjacent to and surrounds the conductive core, an insulating layer which is disposed adjacent to and surrounds the inner semi-conductive layer, an outer semi-conductive layer which is disposed adjacent to and surrounds the insulating layer, a first self-healing layer which is disposed adjacent to and surrounds the outer semi-conductive layer, a metallic screen which is disposed adjacent to and surrounds the first self-healing layer, a second self-healing layer which is disposed adjacent to and surrounds the metallic screen, and a sheath which is disposed adjacent to and surrounds the second self-healing layer.

The outer casing may comprise an additional layer. Optionally, the outer casing comprises a bedding layer. Each of these layers may be as previously defined above.

The outer casing may be configured to allow water to pass therethrough, and the structure of the resilient external layer may comprise a wet composite structure.

Accordingly, in one embodiment the outer casing comprises a bedding layer, an additional layer which is disposed adjacent to and surrounds the bedding layer, and a resilient external layer which is disposed adjacent to and surrounds the additional layer. Optionally, the resilient external layer comprises a self healing tough layer.

Alternatively, the outer casing may be configured to not allow water to pass therethrough, and the composite structure of the resilient external layer may comprise a dry composite structure.

Accordingly, in one embodiment the outer casing comprises a bedding layer, an additional layer which is disposed adjacent to and surrounds the bedding layer, and a resilient external layer which is disposed adjacent to and surrounds the additional layer. Optionally, the resilient external layer comprises a self healing compliant layer and/or a self healing tough layer.

It will be understood that for a cable of the first aspect, including both the single core electrical cable and the multi-core electrical cable, it is advantageous to be able to detect defects visually. Accordingly, the cable may comprise a dye configured to aid the detection of a defect. The dye may be provided in any layer of the cable except the tough layer. Accordingly, the dye may be provided in the inner semi-conductive layer the insulating layer, the outer semi-conductive layer, the first self-healing layer, the metallic screen, the second self-healing layer, the sheath, the bedding layer, the additional layer and/or the compliant layer. The dye may comprise fluorescein and/or CI Solvent Yellow. The dye may be UV sensitive.

A cable in accordance with the first aspect is manufactured using extrusion.

A method for manufacturing an electrical power cable the method comprising:

a) extruding compliant material to form a compliant layer around an inner portion of a cable; and
b) extruding resilient material to form a tough layer around the compliant layer;

wherein the tough layer has a fracture toughness of at least 1 MPa m½ at 296 K, and the compliant layer has a shear loss modulus of at least 0.3 at 296 K; characterised in that the cable comprises a self-healing layer extruded around and surrounding the core.

The method is used to manufacture the resilient cable according to the first aspect.

It will be understood that steps (a) and (b) of the method could be performed simultaneously using a dual extrusion process.

Alternatively, step (a) could be carried out prior to step (b).

Preferably, the tough layer has a Shore D hardness, tensile modulus, bulk modulus shear modulus, fracture toughness and/or bulk compliance as defined above with respect to the first aspect.

Preferably, the compliant layer has a Shore D or Shore A hardness, tensile modulus, bulk modulus shear modulus, shear loss modulus and/or bulk compliance as defined above with respect to the first aspect.

In one embodiment, the tough layer is a self-healing layer. In one embodiment, the compliant layer is a self-healing layer. In embodiments where one is present, the transition layer is a self-healing layer.

Preferably, the tough layer comprises a thermoplastic. Preferably, the tough layer comprises high density polyethylene, polypropylene, poly(oxymethylene), Hytel® 8238 or IROGRAN® D 60 E4O24.

In embodiments where the tough layer is self-healing, it may comprise a supramolecular polymer or a shape memory polymer.

In embodiments where the composite structure of the tough layer and the compliant layer comprise a dry composite structure, the compliant layer may comprises a rubber, thermoset, elastomer. thermoplastic elastomer, or a closed or open cell microcellular foamed thermoplastic elastomer. Preferably, the compliant layer comprises Vamac® ethylene acrylic elastomer, Therban®, Hytemp®, Desmopan®, thermoset polyurethane, Silastic®, Aflas®, Viton® or Tecnoflon®. In embodiments where the tough layer is self-healing it may comprise a hydrophilic thermoplastic elastomer.

The method may comprise initially melting the compliant material prior to its extrusion into the compliant layer.

When the tough layer comprises a closed or open cell microcellular foamed thermoplastic elastomer a gas forming additive may be added to the melted compliant material prior to its extrusion into the compliant layer. Alternatively, the extrusion process may carry the gas itself.

The method may comprise initially melting the resilient material prior to its extrusion into the tough layer.

The method preferably comprises an initial step, carried out prior to step (a), wherein the initial step comprises manufacturing the inner portion of the cable. The step of manufacturing the inner portion of the cable preferably comprises forming a conductive copper core by drawing a copper rod to make a copper wire.

The step of manufacturing the inner portion of the cable preferably comprises providing the conductive copper core with an insulating layer. Preferably, this step comprises extruding polyethylene to form an insulating layer which surrounds the conductive core. The method may involve cross-linking the polyethylene. The cross-linking step may be carried out before or after the extrusion step.

Preferably, the step of manufacturing the inner portion comprises an additional step carried out prior to the step of providing the insulating layer, the step additional comprising providing the conductive copper core with an inner semi-conductive layer which is adjacent to and surrounds the conductive copper core. Preferably, the step of manufacturing the inner portion comprises a further additional step carried out subsequently to the step of providing the insulating layer, the further additional step comprising providing the inner portion with an outer semi-conductive layer which is adjacent to and surrounds the insulating layer.

In one embodiment, the self-healing layer is a separate layer to the resilient and compliant layers. Accordingly, the step of manufacturing the inner portion may comprise extruding a self-healing material to form a self-healing layer around the core. Preferably, the self-healing layer is formed around the insulating layer and more preferably around the outer semi-conductive layer.

The method preferably comprises initially melting the self-healing material prior to its extrusion into the self-healing layer.

The self-healing material may comprise a water-swelling material, a supramolecular matrix and/or a shape memory polymer (SMP).

The water swelling material may comprise a water swelling thermoplastic elastomer (TPE) or a water swelling rubber.

The water swelling TPE may comprise a polymer that is capable of forming a thermoplastic matrix and a hydrophilic additive. For example, the polymer may comprise poly(styrene-block-butadiene-block-styrene) or poly(styrene-block-ethylene-co-butylene-block-styrene). The hydrophilic additive may comprise one or more hydrophilic side chains grafted onto the polymer. Preferably, the hydrophilic side chains comprise poly(acrylic acid), maleic acid or sodium polyacrylate.

The water swelling rubber may comprise a rubber matrix and a hydrophilic additive. The hydrophilic additive may comprise one or more hydrophilic side chains grafted onto the rubber. The hydrophilic additive may comprise poly(acrylic acid), maleic acid or sodium polyacrylate.

It has been observed that water swelling materials swell faster and more extensively if they have been previously immersed in water. Accordingly, if the self-healing material comprises a water swelling material the method may comprise a pre-wetting step. The pre-wetting step may be carried out subsequent to extruding the water swelling material. The pre-wetting step would comprise exposing the outer surface of the extruded water swelling material to a small quantity of water.

Advantageously this would create a region of enhanced response.

The supramolecular matrix may comprise molecules capable of forming labile bonds, for example, at least one of hydrogen bonds, $\pi$-stacking, or ionic bonds. Preferred molecules may comprise a polyimide or a polyamide. Alternatively, the molecule may comprise an ionomer. The supramolecular matrix may comprise a supramolecular polymer or a supramolecular thermoplastic elastomer.

The shape memory polymer (SMP) may comprise a polymeric smart material programmed into the desired shape, wherein if the SMP is deformed then the original shape may be recovered once the shape memory polymer is exposed to a trigger. The trigger may comprise a specific temperature or temperature range, an electrical field, light and/or water. Preferably, the shape memory polymer comprises a thermoplastic polyurethane. Preferably, the shape memory polymer comprises a covalently cross-linked glassy thermoset, such as polynorbornene functionalized with poly-caprolactone and cyano group. Preferably, the shape memory polymer comprises a covalently cross-linked semi-crystalline network, such as a polymer network containing poly(octadecyl vinyl ether)-co-BA. Preferably, the shape memory polymer comprises a physically cross-linked glassy copolymer, such as ethylene oxide-ethylene terephthalate segmented copolymer. Preferably, the shape memory polymer comprises a physically cross-linked semi-crystalline block copolymer, such as polyurethane block copolymers with shape memory effect.

The method of manufacturing the inner portion may comprise providing the inner portion with at least one further layer. The at least one further layer may comprise a metallic screen, a sheath, an additional layer comprising a plurality of wires, a bedding layer or a second self-healing layer.

The step of providing the at least one further layer may comprise extruding the further layer. Alternatively, the step of providing the at least one further layer may comprise wrapping a tape round a partially formed inner portion to create the further layer.

It will be appreciated that the cable of the first aspect may be used in a variety of environments.

Accordingly, in accordance with a further aspect of the invention, there is provided use of the cable of the first aspect in a substantially wet environment.

The substantially wet environment may comprise a submarine environment.

The cable may comprise a plurality of cable elements, each comprising a conductive core, and an outer casing surrounding the cable elements. Preferably the outer casing is configured to allow water to pass therethrough.

In accordance with a still further aspect of the invention, there is provided use of the cable of the first aspect in a substantially dry environment.

The cable may comprise a plurality of cable elements, each comprising a conductive core, and an outer casing surrounding the cable elements. Preferably the outer casing is configured to not allow water to pass therethrough.

For a better understanding of the invention, and to show how embodiments of the same may be carried into effect, reference will now be made, by way of example, to the accompanying Figures, in which:-

**Figure 1** is a cross-sectional view of a prior art single core cable;
**Figure 2** is a cross-sectional view of a prior art triple core cable;
**Figure 3** is schematic side view showing the structure of a prior art water blocking tape;
**Figure 4a** is a photo of water blocking tape with a defect;
**Figure 4b** is a photo of the water blocking tape of Figure 4a after it has been exposed to water;
**Figure 5** is a graph showing the change in load on a test rig caused by a sample of water blocking tape swelling in response to the presence in water over fifteen minutes;
**Figure 6** is a graph showing the change in load for the same sample as Figure 5, but over one hundred and twenty minutes;
**Figure 7** is a table showing the properties of various example materials which could be used to form a compliant sub-layer in various embodiments of the cable of the invention;

**Figure 8** is a table showing the properties of various example materials which could be used to form a tough outer-layer in various embodiments of the cable of the invention;

**Figure 9** shows the chemical formula of poly(styrene-block-butadiene-block-styrene) (SBS);

**Figure 10** shows the chemical formula of poly(styrene-block-ethylene-co-butylene-block-styrene) (SEBS);

**Figure 11** shows the chemical formula of poly(acrylic acid);

**Figure 12** shows how ureido-4[1H]-pyrimidinone (UPy) forms labile bonds;

**Figure 13** is a schematic diagram showing a supramolecular polymer;

**Figure 14** shows a polyimide molecule capable of $\pi$ stacking;

**Figure 15** shows a polyamide molecule capable of $\pi$ stacking;

**Figure 16** is a schematic diagram showing a supramolecular thermoplastic elastomer;

**Figure 17a** shows the structure of a suitable precursor for an ionomeric monomer;

**Figure 17b** shows the structure of an ionomeric monomer which may be formed from the precursor of Figure 15a;

**Figure 18** shows a shape memory polymer (SMP) which, when triggered by water, changes from an S-shape to a straight line;

**Figure 19** shows the chemical structure of a SMP;

**Figure 20** shows the chemical structure of polynorbornene functionalized with poly-caprolactone and cyano group which may form a covalently cross-linked glassy thermoset;

**Figure 21** shows the chemical structure of poly(octadecyl vinyl ether)-co-BA, a polymer which may form a covalently cross-linked semi-crystalline network;

**Figure 22** shows the chemical structures of ethylene oxide-ethylene terephthalate segmented copolymers, which may form a physically cross-linked glassy copolymer;

**Figure 23** shows the chemical structure of suitable polyurethane block copolymers with shape memory effect which may form a physically cross-linked semi-crystalline block copolymer;

**Figure 24** shows the chemical structure of sodium polyacrylate;

**Figure 25a** shows a self-healing composition comprising water swelling pellets distributed in a supramolecular polymer matrix;

**Figure 25b** shows the self-healing composition of Figure 23a where a defect has been introduced into the supramolecular polymer matrix;

**Figure 25c** shows the self-healing composition of Figures 23a and b after the composition has been exposed to water;

**Figure 26** is a cross-sectional view of an improved single core cable in accordance with a first embodiment of the invention;

**Figure 27** is a cross-sectional view of an improved triple core wet design cable in accordance with a second embodiment of the invention;

**Figure 28** is a cross-sectional view of an improved triple core dry design cable in accordance with a third embodiment of the invention;

**Figure 29** is a cross-sectional view of an apparatus for manufacturing a tough layer around an inner portion of a cable;

**Figure 30** shows the chemical formula of CISEBS, a chloromethylated form of SEBS;

**Figure 31** shows the chemical structure of a molecule capable of forming hydrogen bonds;

**Figure 32** is a schematic diagram of a cable in accordance with the present invention; and

**Figure 33** is a schematic diagram of a further cable in accordance with the present invention.

Example 1: Cables used in the prior art

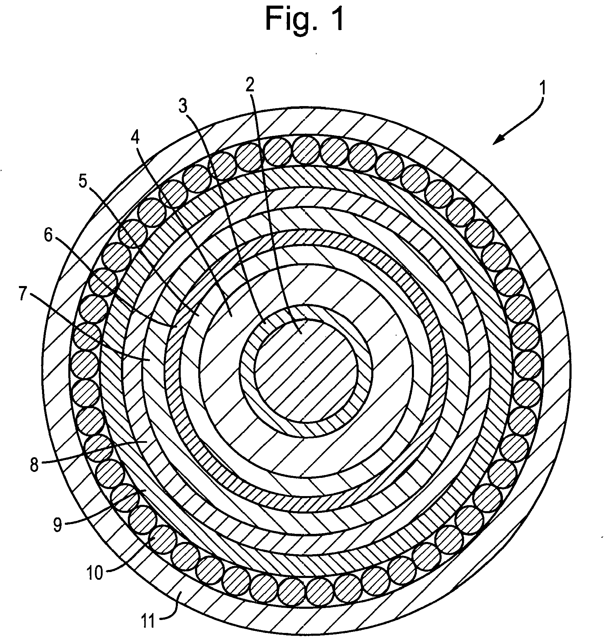

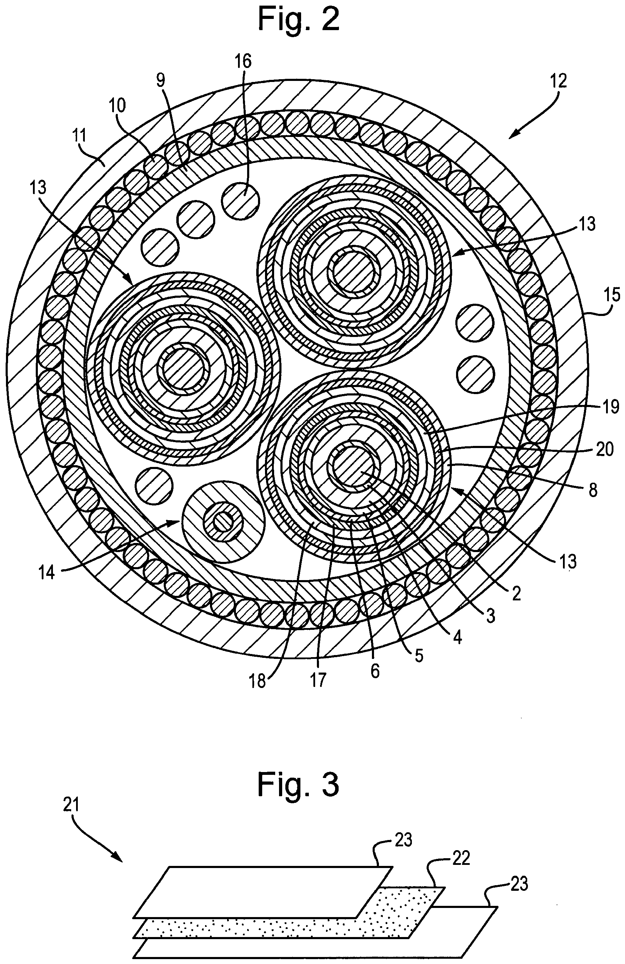

Figures 1 and 2 show the cross-section through prior art power cables. Figure 1 shows a single core cable 1 comprising an inner copper core 2 for conducting electricity. A number of different concentric layers are disposed sequentially around the inner core 2 of cable 1. Immediately adjacent to the conductive core 2, there is disposed an inner semi-conductive layer 3, which would typically comprise a carbon-loaded polyethylene or ethylene copolymer (such as ethylene vinyl acetate (EVA) and ethylene butyl acrylate (EBA)), or blends thereof. Adjacent to the inner semi-conductive layer 3, there is disposed an insulating layer 4 which comprises cross-linked polyethylene. The semi-conductive layer 3 provides a degree of insulation for the insulating layer 4 from the conductive core 2 and the insulating layer 4 provides an insulating electrical barrier between the core 2 and the rest of the single core cable 1.

Adjacent to the insulating layer 4, there is disposed an outer semi-conductive layer 5 as with the inner semi-conductive layer 3, this would typically comprise a carbon-loaded polyethylene or ethylene copolymer (such as ethylene vinyl acetate (EVA) and ethylene butyl acrylate (EBA)), or blends thereof. The purpose of the outer semi-conductive layer 5 is to maintain a defined electric field within the insulating layer 4 and at value below that which would cause electrical breakdown of the insulating layer 4. It also allows safe discharge of any charge build-up within the insulation layer 4 when the cable 1 is switched off. Adjacent to the outer semi-conductive layer, there is disposed a water blocking tape layer 6. If the single core cable 1 were to be damaged creating a defect in the cable 1, the water blocking tape layer 6 is intended to swell upon contact with water which is penetrating the cable 1, preventing any water penetrating to the outer semi-conductive layer 5, insulating layer 4, inner semi-conductive layer 3 and conductive core 2.

Adjacent to the water blocking tape layer 6, there is disposed an inner sheath 7 which would typically comprise lead. The inner sheath 7 is provided to try and prevent any defects penetrating the water blocking tape layer 6. The inner sheath 7 may have been formed due to a solid extrusion. Alternatively, the inner sheath 7 may have been formed from a flat extrusion or tape where the extrusion was then wrapped around the water blocking tape layer 6 and bonded. Adjacent to the inner sheath 7 there is disposed an outer sheath 8, which would typically comprise medium or high density polyethylene (MDPE or HDPE), polypropylene (PP) and/or poly(oxymethylene). The outer sheath 8 is provided to prevent the inner sheath 7 from being exposed to water and thereby protects the inner sheath 7 from corrosion.

Adjacent to the outer sheath 8 there is disposed a bedding layer 9, which would typically comprise which would typically comprise polyvinyl chloride (PVC), an ethylene copolymer (such as ethylene vinyl acetate (EVA) and ethylene butyl acrylate (EBA)), a thermoplastic polyester (such as polybutylene terephthalate (PBT) or polyethylene terephthalate (PET)), and adjacent the bedding layer 9 there is disposed a layer of galvanised steel wires 10, which can be filled with a bitumen compound. The bedding layer 9 is provided to hold the layer of galvanised steel wires 10 in place, and the layer of galvanised steel wires 10 is provided to prevent any defects from occurring in the structure. Finally, an external jacket layer 11 is provided which typically comprises yarn cladding made of polypropylene. The external jacket layer 11 is provided to assist the bedding layer 9 in holding the layer of galvanised steel wires 10 in place. In a wet cable design water may pass through the external jacket layer 11, galvanised steel wires 10 and bedding layers.

Referring now to Figure 2 there is shown a triple core electric cable 12. The cable 12 comprises three spaced apart cable elements 13 and a fibre optic element 14 all contained within an outer jacket casing 15. The three cable elements 13 and the fibre optic element 14 are held in place by several spaced apart filler elements 16 which typically comprise polyvinylchloride (PVC), polyethylene (PE) and/or chlorinated polyethylene. However, newer alternatives, which have arisen due to environmental concerns, may comprise a flame retardant inorganic filler, such as magnesium hydroxide and aluminium hydroxide. Each cable element 13 comprises a conductive core 2 and a series of concentric layers disposed around the conductive core 2 as explained below.

As with the single core electric cable 1 shown in Figure 1, adjacent the conductive core 2 there is disposed an inner semi-conductive layer 3, then an insulating layer 4, then an outer semi-conductive layer 5, then water blocking tape layer 6. In contrast to the single core electric cable 1 of Figure 1, in the triple core cable shown in Figure 2, adjacent to the water blocking tape layer 6 there is disposed a copper counter helix 17, and disposed outside the helix 17, there is disposed a copper counter screen 18. The helix 17 and screen 18 are provided to provide a conducting earth plane or a reference voltage plane to support electrical measurements of the cable and/or an electrical protection function. A water blocking tape layer 19 is also provided. As with the single core cable 1, this water blocking tape layer 19 is intended to swell upon contact with water which is penetrating the cable 12, preventing any water penetrating to the outer semi-conductive layer 5, insulating layer 4, inner semi-conductive layer 3 and conductive core 2. Adjacent the swelling tape layer 19, there is disposed an aluminium tape layer 20, which tape provides both a water blocking barrier and an electrical screen. The latter function reduces the electric field beyond the layer to avoid electrical discharge and corona which could damage the cable internally and to reduce the generation of eddy currents from electromagnetic coupling with nearby cables. Finally, an outer sheath 8 is provided adjacent to the aluminium tape layer 20. Similar to the single core electric cable 1, the outer casing 15 in Figure 2 comprises an inner bedding layer 9, an outer yarn cladding layer 11, which may comprise polypropylene, and in between these two layers there is disposed a layer of galvanised steel wires filled with a bitumen compound 10.

The triple core electric cable 12 illustrated in Figure 2 is known as a wet cable, as water may pass through the outer casing 15 but will not be able to penetrate the cable elements 14 as the water will not be able to pass through the outer sheath 8. Figures are not known for the amount of cables which fail due to defects, and since data is scarce, the problems associated with water blocking tape 21 have not previously been recognised. However, when a defect does manage to penetrate this deeply if the water-blocking tape 6 fails, then eventually the defect could extend to the conductive core 2 causing the cable 12 to fail. Such a failure can be disastrous due to the inaccessible nature of many cables. It is for this reason that it is highly desirable to develop an improved system resistant to defects, and preferably capable of self-repair in the unlikely event of a defect occurring.

While not illustrated, it will be appreciated that prior art dry design cables are predominantly as described above, except the external jacket layer 11 will comprise a water impermeable outer sheath.

Example 2: Water blocking tape

The water blocking tape layer 6 used in the cables 1, 12 shown in Figures 1 and 2 comprises water blocking tape 21. During manufacture, this tape 21 must be wrapped round the outer semi-conductive layer 5, which means manufacture of cables comprising a water blocking tape layer 6 is labour intensive, resulting in the cables being costly. The structure of a typical non-woven water blocking tape 21 is shown in Figure 3. The tape comprises an inner superabsorbent gel layer 22 sandwiched between two non-conductive layers 23, which comprise polyester. Alternatively, a woven water blocking tape may instead comprise a woven layer impregnated with a water-absorbent powder.

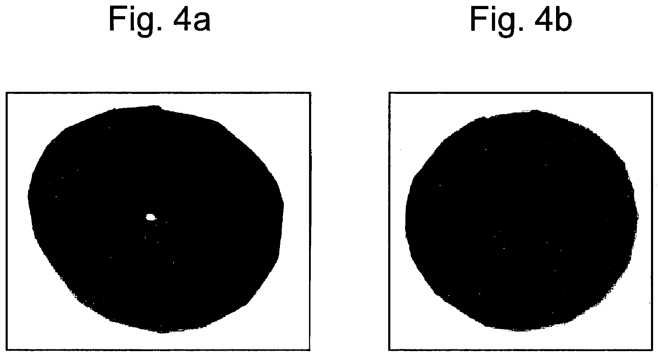

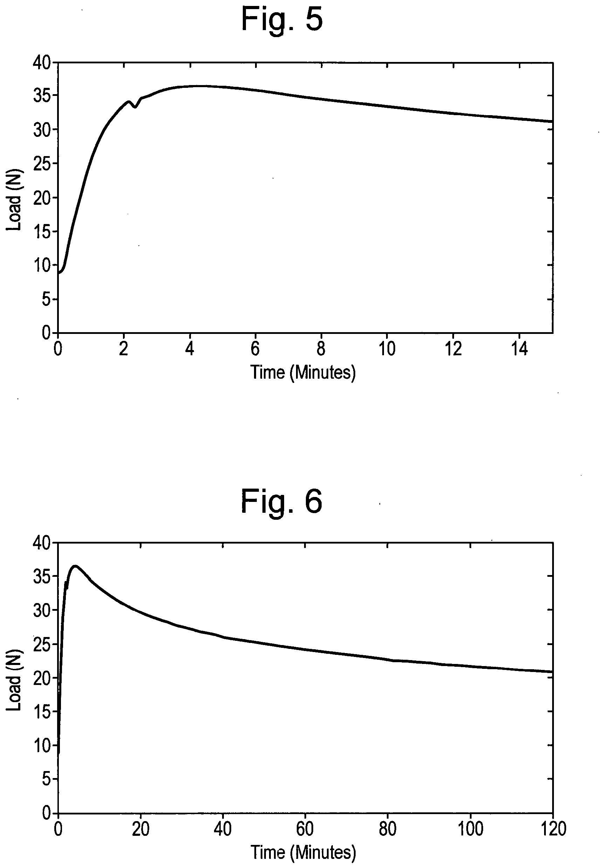

Figure 4a shows a water blocking tape 21 provided with a void 24. The superabsorbent gel provided in the water blocking tape 21 can easily absorb its own weight in water. As shown in Figure 4b, when the water blocking tape 21 was exposed to water, the absorption caused the tape to swell, thereby filling the void 24. However, the inventors have found that the water blocking tape 21 may fail if exposed to water over an extended period of time. To illustrate this, a sample of a water blocking tape 21 was exposed to water and the swelling pressure caused by the absorption of water was measure over time. The graphs shown in Figures 5 and 6 show the results obtained where the swelling pressure is represented by the load. Initially, the water blocking tape 21 absorbed water very quickly, but then lost structural integrity resulting in a loss of swelling pressure as the superabsorbent gel layer 22 dissolved into the water.

These measurements were supported by the visual observation of clear gelatinous material appearing in the water as it seeped out of the water blocking tape 21. Accordingly, the protective capabilities of the water blocking tape 21 are short-lived, particularly in moist or submarine environments.

Example 3: Modulus Controlled Materials

*(i) Tough layer*

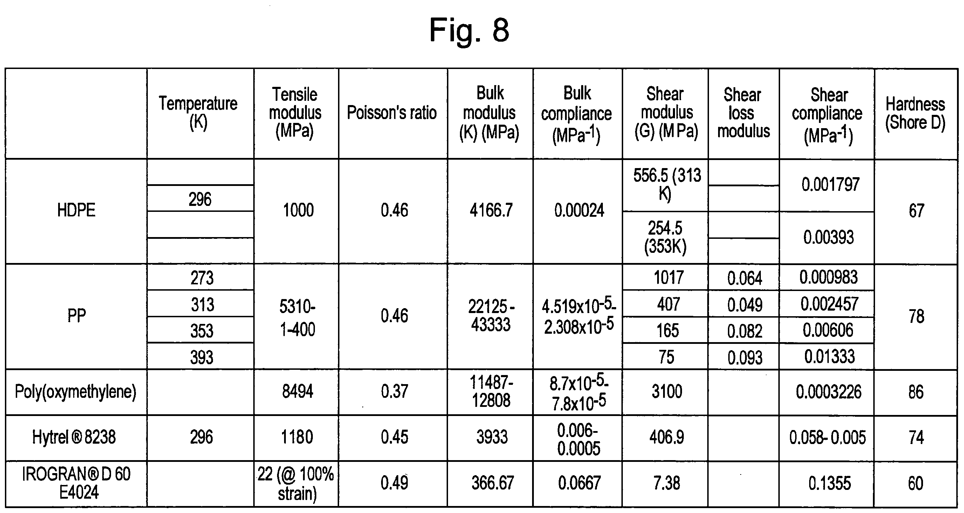

To prevent defects forming in the self-repair cables, the inventors have realised it is advantageous to provide the cables with an outer jacket being a tough layer, which is resistant to the formation of defects. Suitable materials and their properties are shown in the table of Figure 8. The example materials identified are high density polyethylene (HDPE), polypropylene (PP) and poly(oxymethylene), as well as Hytel® 8238, which is available from Dupont®, and Irogran® D 60 E4024, which is available from Huntsman Corporation.

The properties of interest for each of the materials used in the tough layer are (i) the tensile modulus, (ii) the Poisson's ratio, (iii) the bulk modulus, (iv) the bulk compliance, (v) the shear modulus, (vi) the shear loss modulus, (vii) the shear compliance, and (viii) hardness, each of which are discussed below.

(i) The tensile modulus, otherwise known as the Young's modulus, is a measure of stiffness and is the tensile stress divided by tensile strain. This can be calculated according to the following formula:

$$E = FL_O/A_O\Delta L$$

Where:

E is the Young's modulus or tensile modulus and is measured in pascals (Pa);
F is the force exerted on an object and is measured in newtons (N);
$L_O$ is the original length of the object and is measured in meters (m);
$A_O$ is the original cross-sectional area through which the force is applied and is measured in meters squared $(m^2)$; and
$\Delta L$ is the amount by which the length of the object changes and is measured in meters (m).

(ii) The Poisson's ratio is the negative ratio of transverse to axial strain. It is calculated by dividing the fraction (or percentage) of expansion by the fraction (or percentage) of compression. The Poisson's ratio of a material may be between -1 to 0.5.

(iii) The bulk modulus measures the resistance to uniform compression and calculated according to the following formula:

$$K = -VdP/dV$$

Where:

K is the bulk modulus and is measured in pascals (Pa);
V is volume and is measured in meters cubed $(m^3)$; and
P is pressure and is measured in pascals (Pa).

(iv) The bulk compliance is obtained by taking the reciprocal of the bulk modulus for a material.

(v) The shear modulus is another measurement of stiffness and is the shear stress over shear strain. It can be calculated according to the following formula:

$$G = FL_o/A\Delta x$$

Where:

G is the shear modulus and is measures in pascals (Pa);
F is the force exerted on an object and is measured in newtons (N);
$L_o$ is the original length of the object and is measured in meters (m);
A is the area on which the force acts and is measured in meters squared ($m^2$); and
$\Delta x$ is the transverse displacement and is measured in meters (m).

(vi) The shear loss modulus relates to the amount of energy lost in a stress strain cycle (typically as heat). A material with high loss will tend to absorb and dissipate mechanical energy.

(vii) The shear compliance is obtained by taking the reciprocal of the shear modulus for a material

(v) Hardness is a measure of materials resistance to permanent indentation. The Shore hardness test, like many other hardness tests, measures the depth of an indentation in a material created by a given force on a standardized presser foot. This depth is dependent on the hardness of the material, its viscoelastic properties, the shape of the presser foot, and the duration of the test. The basic test requires applying the force in a consistent manner, without shock, and measuring the hardness (depth of the indentation). If a timed hardness is desired, force is applied for the required time and then read. The material under test should be a minimum of 6.4 mm (0.25 inches) thick.

The Shore D scale is used for harder plastics. The indenting foot used is a hardened steel rod 1.1 mm - 1.4 mm diameter, with a 30° conical point and a 0.1 mm radius tip, the applied mass is 4.550 kg and the resulting force is 44.64 N.

With the exception of IROGRAN®, all of the materials tested had a tensile modulus of at least 1000 MPa, a bulk modulus of at least 3900 MPa, a shear modulus of at least 250 MPa. Additionally, all of the materials had a Poisson's ratio of between 0.37 and 0.49 and a hardness, using the Shore D scale, of at least 60.

While not shown in the table of Figure 8, another important property of the material which comprises the tough layer is the fracture toughness. Fracture toughness is a property which describes the ability of a material containing a crack to resist fracture. It will be understood that it is important that it is an important feature of the present invention that the tough layer resists the propagation of fractures. The inventor's have found that the material comprising the tough layer needs to possess a fracture toughness of at least 1 MPa m½ at about 296 K. For example, polypropylene (PP), shown in Figure 8, has a fracture toughness of 1 MPa m½.

*(ii) Compliant Layer*

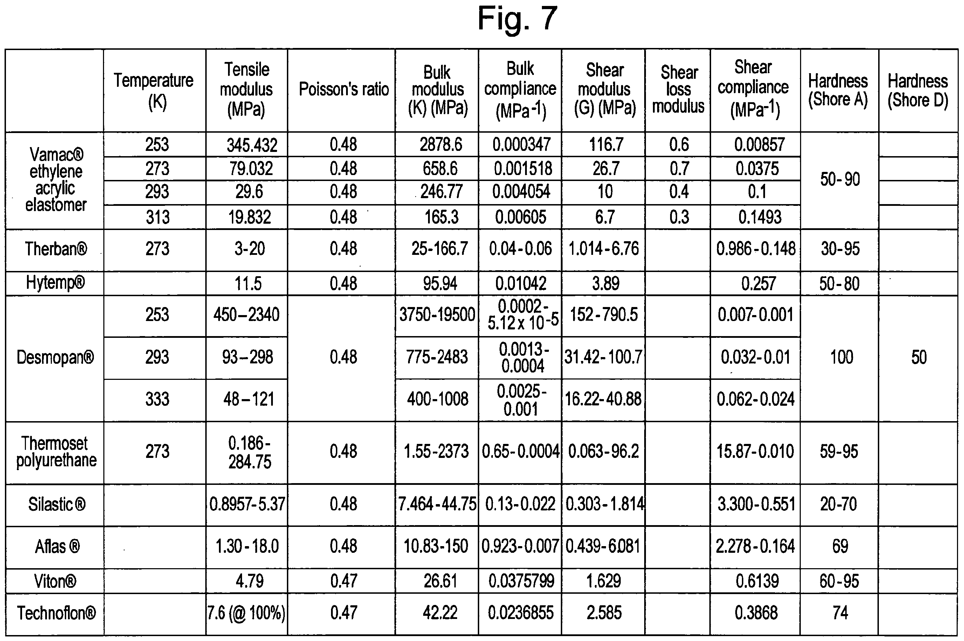

In addition to providing the cables with a tough outer jacket tough layer, it is desirable for the cables to possess a degree of compliance, thereby helping to prevent defects from forming. For this reason, it is desirable that some embodiments of the cable include a compliant layer which comprises a flexible material, this compliant layer being disposed between the tough layer and the core, and adjacent to the tough layer. Suitable materials for the compliant layer and their properties are shown in the table of Figure 7.

The materials shown are thermoset polyurethane, as well as a number of commercially available thermosets and elastomers, including the following examples: Vamac® ethylene acrylic elastomer, which is available from DuPont®; Therban®, which is available from LANXESS; Hytemp® and Desmopan®, which are available from Bayer®; Silastic®, which is available from Dow Corning®; Aflas® and Viton®, which are available from DuPont®; and Technoflon®, which is available from Solvay®.

The properties of interest are the same as those given for the materials intended to form the tough outer jacket tough layer. However, as well as Shore hardness D being given for one material, Shore hardness A is also given. The Shore A scale is used for softer materials. The indenting foot used is a hardened steel rod 1.1 mm - 1.4 mm diameter, with a truncated 35° cone and a 0.79 mm diameter, the applied mass is 0.822 kg and the resulting force is 8.064 N.

With the exception of Vamac® ethylene acrylic elastomer, Desmopan® and thermoset polyurethane, all of the materials tested had a tensile modulus of 20 MPa or under. Additionally, Vamac® ethylene acrylic elastomer had a tensile modulus of 19.832 MPa at 313 K, with higher values recorded at lower temperatures. Desmopan® had a tensile modulus of between 48 to 121 MPa at 333 K, with higher values recorded at lower temperatures and thermoset polyurethane had a tensile modulus of between 0.186 to 284.75 MPa at 273 K, this shows that the material can be selected for the desired application. All of the materials had a Poisson's ratio of 0.47 or 0.48.

With the exception of Vamac® ethylene acrylic elastomer, Desmopan® and thermoset polyurethane, all of the materials tested had a bulk modulus of less than 200 MPa. Additionally, Vamac® ethylene acrylic elastomer had a bulk modulus of 165.3 MPa at 313 K, with higher values recorded at lower temperatures. Desmopan® had a bulk modulus of between 400 to 1008 MPa at 333 K, with higher values recorded at lower temperatures and thermoset polyurethane had a bulk modulus of between 1.55 to 2373 MPa at 273 K.

With the exception of Vamac® ethylene acrylic elastomer, Desmopan® and thermoset polyurethane, all of the materials tested had a shear modulus of under 10 MPa. Additionally, Vamac® ethylene acrylic elastomer had a shear modulus of 6.7 MPa at 313 K, with higher values recorded at lower temperatures. Desmopan® had a shear modulus of between 16.22 to 40.88 MPa at 333 K, with higher values recorded at lower temperatures and thermoset polyurethane had a shear modulus of between 0.063 to 96.2 MPa at 273 K.

Desmopan® was the hardest of the materials tested and had a hardness of 50 using the Shore D scale. The remaining materials were too soft to be tested using the Shore D scale and all the materials had a hardness of 100 or less using the Shore A scale.

Alternatively, the compliant layer beneath the tough layer may comprise a closed or open cell microcellular foamed thermoplastic material which possessed the desired physical properties. It will be readily understood that the properties for these materials would have to be modified depending on whether or not the cells of the structure were filled with air or water.

*(iii) Transition Layer*

The transition layer, in embodiments where one is present, will ideally have material characteristics mid-way between the compliant layer and the tough layer. Accordingly, the desired properties of the transition layer will vary depending on which materials were selected to form the compliant layer and the tough layer. However, materials that may comprise a suitable compliance layer in the tables of Figures 7 and 8 are IROGRAN® D 60 E4024, Desmopan® or Hytrel® 8238.

In addition to possessing the required flexibility requirements it would also be advantageous for the resilient and compliant layers to be capable of self-healing. It may also be advantageous, in embodiments where one is present, for the transition layer to be self healing. Accordingly, the following examples describe various suitable materials with self-healing properties.

Example 4: Water Swelling Thermoplastic Elastomers (TPEs)

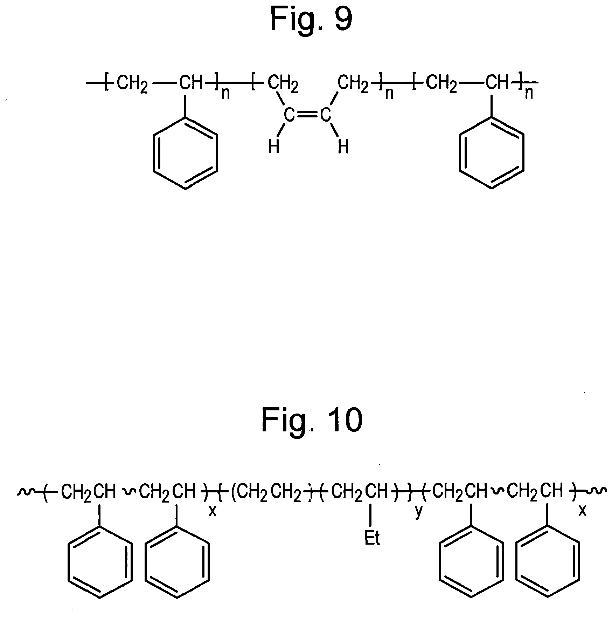

Water swelling thermoplastic elastomers (TPEs) contain two distinct parts: (i) a thermoplastic matrix, which provides structure and processability, and (ii) a hydrophilic additive, which confers the water swelling capability. Two such TPEs are poly(styrene-block-butadiene-block-styrene) (SBS) and poly(styrene-block-ethylene-co-butylene-block-styrene) (SEBS). The structures of SBS and SEBS are illustrated in Figures 9 and 10. The structures comprise styrene end groups which harden the material and provide it with thermoplastic properties, while the butadiene and butane structures in the centre confer the elastomeric properties.

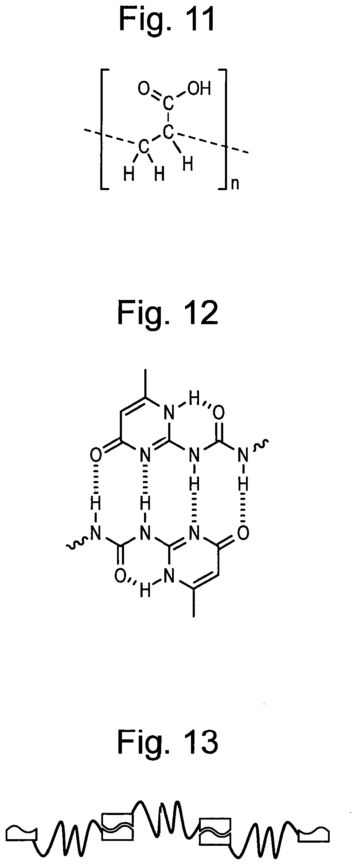

In the pure form, TPEs are hydrophobic. However, this can be overcome by grafting hydrophilic side chains onto the polymer backbone. A commonly selected molecule to graft on is poly(acrylic acid), illustrated at Figure 11. The OH group on the poly(acrylic acid) will deprotonate if immersed in water, leaving a negatively charged oxygen. The presence of a negative charge on the polymer backbone causes an influx of electrolytes which generates an osmotic gradient. As a result, water will flow into the region to restore equilibrium, resulting in the deformation and swelling of the polymer matrix.

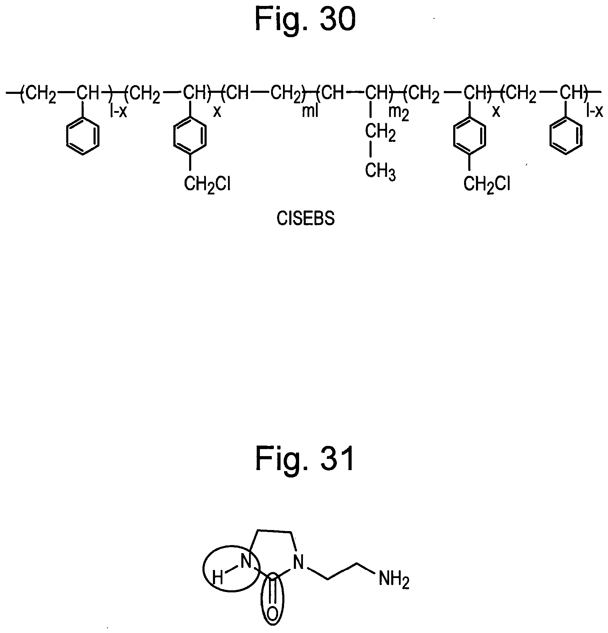

It is possible to graft the poly(acrylic acid) groups onto SEBS chains by firstly grafting poly(butylacrylate) through the addition of tert-butylacrylate (tBA) to a polymer melt in the presence of 2,2-bipyridine, copper chloride, and the initiator CISEBS (a chloromethylated form of an SEBS, as shown in Figure 30). The resultant butylacrylate side group can then be hydrolysed to form poly(acrylic acid) by refluxing the copolymer in a mixture of 10/1 dioxane / HCL over the course of 2 days[1].

Alternatively, the hydrophilic properties of TPEs can be improved by grafting other hydrophilic groups, such as maleic acid, onto the polymer backbone. The hydrophilicity of TPEs can also be increased by incorporating more polar groups (i.e. OH, NH2, etc[2]) and decreasing the number of non-polar groups ($CH_3$, benzene groups, etc[3]). The degree of swelling can be controlled by the concentration of charged molecules grafted to the TPE backbone. A higher concentration of charged molecules results in a greater osmotic gradient and so a larger response[4]. The degree of swelling is also influenced by the electrolyte concentration of the surrounding media. It has been shown experimentally that materials using this response method swell to a lesser degree if immersed in salt water, where the high electrolyte concentration mitigates the effect of the deprotonated charged groups[4].

Where a water swelling TPE is being used in a self-healing layer of a self-repairing cable then the concentration of the hydrophilic groups should be selected depending on the environment in which the cable was intended to be used. For instance, if the cable was intended to be used in a submarine environment, where any defects would expose the self-healing layer to salt water, the concentration of the hydrophilic groups in the water-swelling TPE would need to be higher than in a cable which wasn't going to be exposed to salt water, for instance a cable which was intended to be used underground and which might be exposed to fresh water. The concentration of the charged molecules in water swelling TPE should be selected to ensure the water swelling TPEs would swell sufficiently to block a defect without threatening the overall structural integrity of the system.

It has been found that water swelling TPEs are stable up until at least 150°C, but it is not anticipated that a cable will function at temperatures any greater than 90°C. For this reason, water swelling TPEs are suitable for use as a self-healing layer in a self-repairing cable.

Example 5: Supramolecular material

Supramolecular polymers are polymers wherein the monomers are held together by 'labile' bonds *i.e.* non-covalent bonds including hydrogen bonding, $\pi$-stacking, or ionic bonds. In the event that the material is damaged, these bonds are temporarily broken, but can reform with another part of the damaged material to restore the breach. A key advantage of materials in this class is that repaired materials are mechanically identical to undamaged materials.

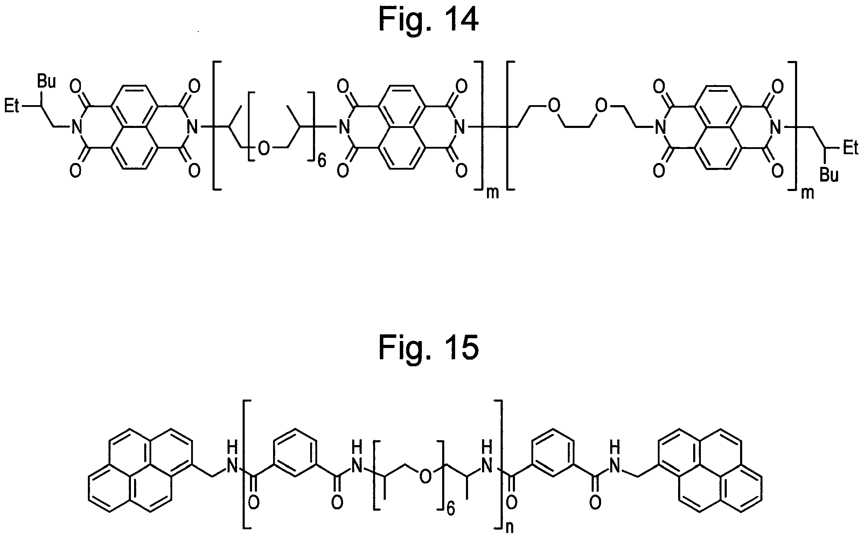

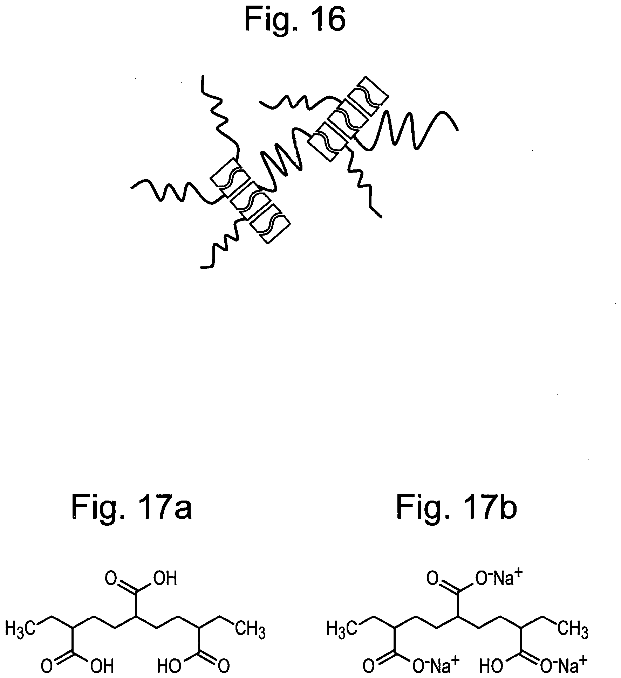

Examples of groups which forms hydrogen bonds are ureido-4[1H]-pyrimidinone (UPy), as shown in Figure 12, and the molecule shown in Figure 31. Two such groups joined by a linker would comprise a suitable monomer for a supramolecular polymer, and this is illustrated schematically in Figure 13. Additionally, it is possible for materials that contain $\pi$ orbitals to interact with one another via stacking of these groups. Figures 14 and 15 show a polyimide and polyamide molecule respectively, which would be capable of forming a supramolecular thermoplastic elastomer due to the $\pi$ stacking interactions which would occur between the molecules. This is illustrated schematically in Figure 16.

Finally, ionomers are a class of polymers that contain ionic groups within their backbone, along with neutral repeating units. Due to the polar nature of the ionic groups, they tend to associate preferentially with one another over the polymer backbone, resulting in the formation of clusters that effectively pin the polymer structure in place. An example of the structure of an ionomeric monomer is shown in Figure 17b, and Figure 17a shows a precursor for the ionomeric monomer.

Such materials are highly suitable for self repair after ballistic impact (or any point where there is a generation of heat) as this can cause the temporary dissociation of the ionic groups and allow the polymers to flow into damaged regions. When the system cools, the ionic groups will self-assemble into clusters, solidifying and fortifying the newly-repaired polymer.[5]

Example 6: Shape memory polymers (SMPs)

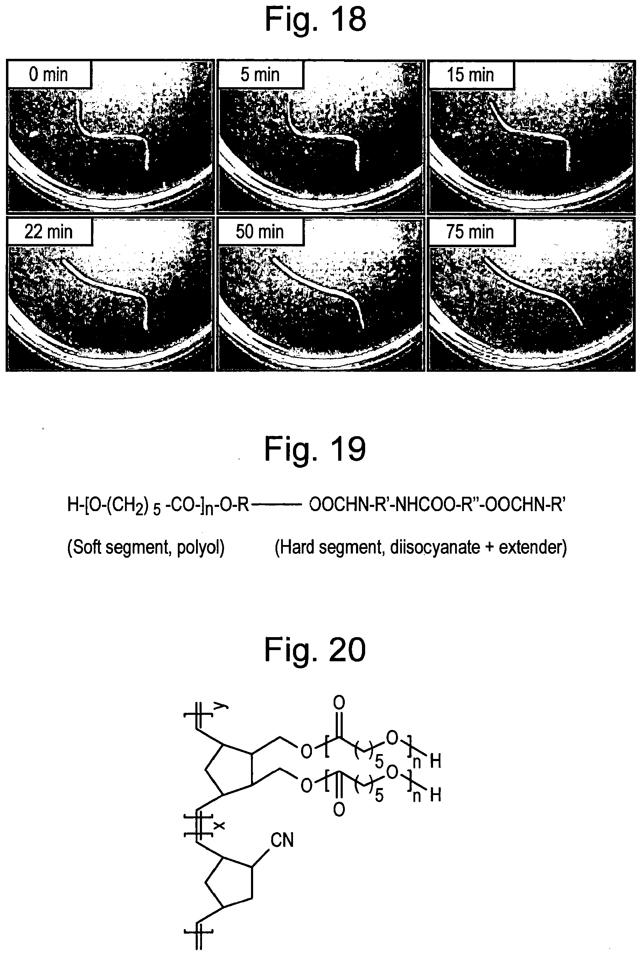

Shape memory polymers (SMPs) are polymeric smart materials that can be 'programmed' into a particular state. If deformed, it is possible to recover this state through the application of a trigger, which may be temperature, electrical fields, water or even light. An example of this is shown in Figure 18, where an SMP wire is triggered by water and changed from an S-shape to a straight line after 75 minutes exposure time.

Investigations into SMPs have uncovered a number of different structures that, when copolymerized, exhibit a shape-memory effect. A simple example is a thermoplastic polyurethane developed by Mitsubishi, this is shown in Figure 19. This material has two triggers: heating the material above its $T_g$ (36.7°C) causes the material to soften and return to its original state. However, exposure to water causes the $T_g$ to fall to 22°C, effectively allowing shape memory effects to take place under ambient conditions.[6]

Further investigations into SMPs have shown that there are a number of different classes of SMPs[7]. These include:

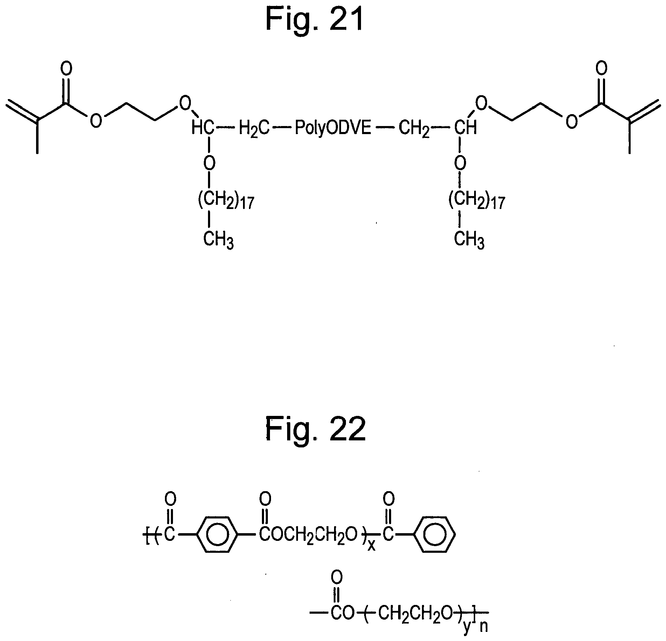

- Covalently cross-linked glassy thermosets, these are highly flexible initially and provide excellent recovery characteristics. However, once programmed this system is difficult to reshape owing to the use of covalent bonds in creating the permanent state. An example of a covalently cross-linked glassy thermoset is polynorbornene functionalized with poly-caprolactone and cyano group, this is shown in Figure 20.[8]
- Covalently cross-linked semi-crystalline networks, as with covalently cross-linked glassy thermosets, materials of this type are difficult to reshape once set, but provide faster recovery speeds. An example of a covalently cross-linked semi-crystalline network is a polymer network containing poly(octadecyl vinyl ether)-co-BA shown in Figure 21.[9]

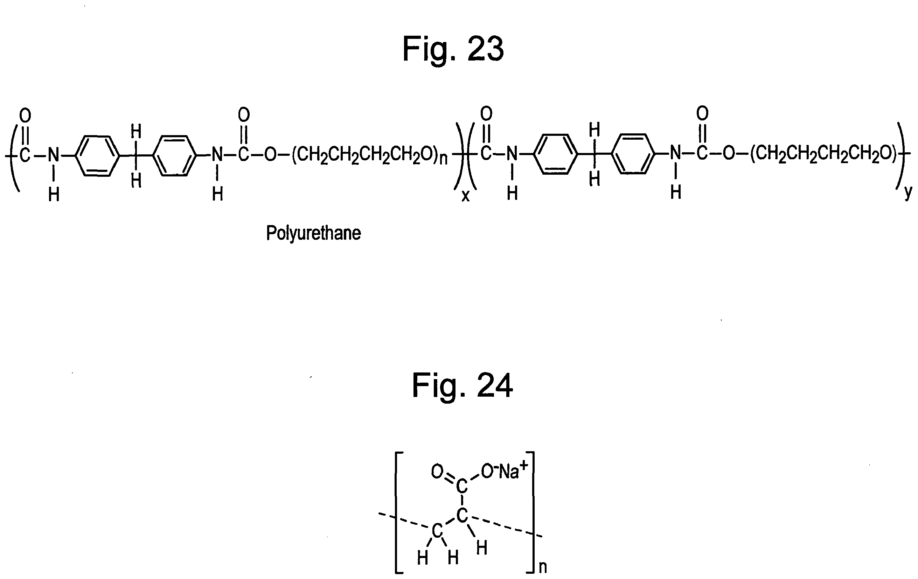

- Physically cross-linked glassy copolymers, these are easier to process than either covalently cross-linked glassy thermosets or covalently cross-linked semi-crystalline networks, as the material can flow and reshaped at high temperatures. Typically these materials rely on entanglement regions to provide structure, but are compatible with other reversible bonding systems such as hydrogen bonding and ionomeric bonding. An example of a physically cross-linked glassy copolymer is ethylene oxide-ethylene terephthalate segmented copolymer, shown in Figure 22.[10]
- Physically cross-linked semi-crystalline block copolymers utilize the melting point of the soft domains, while many SMPs rely on heating above the glass transition point to induce reformation. When the crystallites in the soft domains are melting the material is rubbery and can be easily shaped without flowing, only freezing in position when the material solidifies. An example of a physically cross-linked semi-crystalline block copolymer is polyurethane block copolymers with shape memory effect, shown in Figure 23.[11]

Example 7: Water swelling rubbers

Similar to water swelling TPEs, water swelling rubbers comprise a hydrophobic rubber matrix that contains a hydrophilic additive. The hydrophilic additive is commonly poly(acrylic acid), maleic acid or sodium polyacrylate which is illustrated in Figure 24. Accordingly, water swelling rubbers could be used in similar applications to TPEs.

Example 8: Water swelling TPEs in a supramolecular polymer matrix

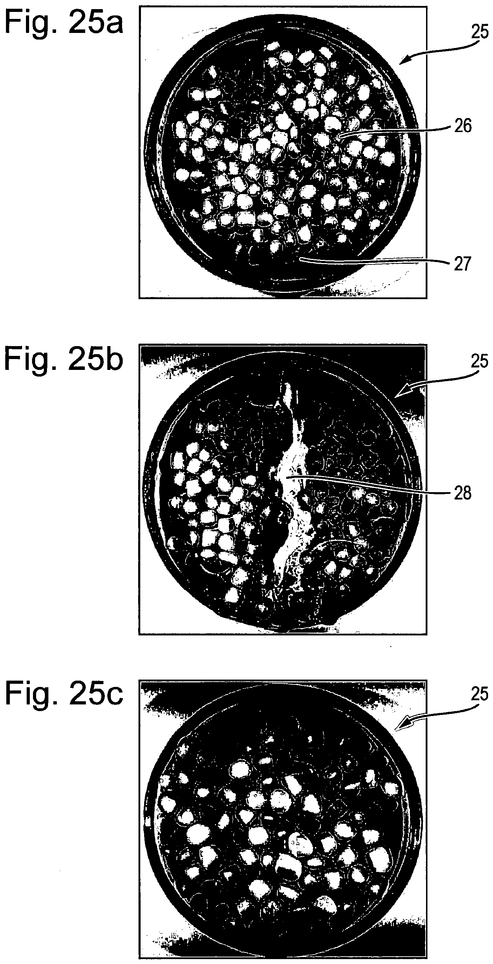

Figure 25a shows a self-healing composition 25 comprising pellets 26 distributed in a supramolecular polymer matrix 27, wherein the pellets comprise a water swelling TPE. Figure 25b shows the self-healing composition 25 of Figure 25a where a defect 28 which has been introduced into the supramolecular polymer matrix 27 due to the matrix having been scored with a spatula. Figure 25c shows the self-healing composition 25 of Figures 25a and b after the composition 25 was exposed to water. The water caused the pellets 26 to swell forcing the supramolecular polymer matrix 27 on either side of the defect 28 to be drawn together, closing the defect and enabling the matrix 27 to heal by reforming the labile bonds which were present before the defect was introduced. Due to the presence of the pellets 26 the matrix 27 was able to heal in a matter of seconds, much faster than it otherwise would have.

While the above experiment was carried out using pellets 26 comprising a water swelling TPE it will be readily appreciated that a similar system using pellets comprising a water swelling rubber would also be effective.

Example 9: Improved cable designs

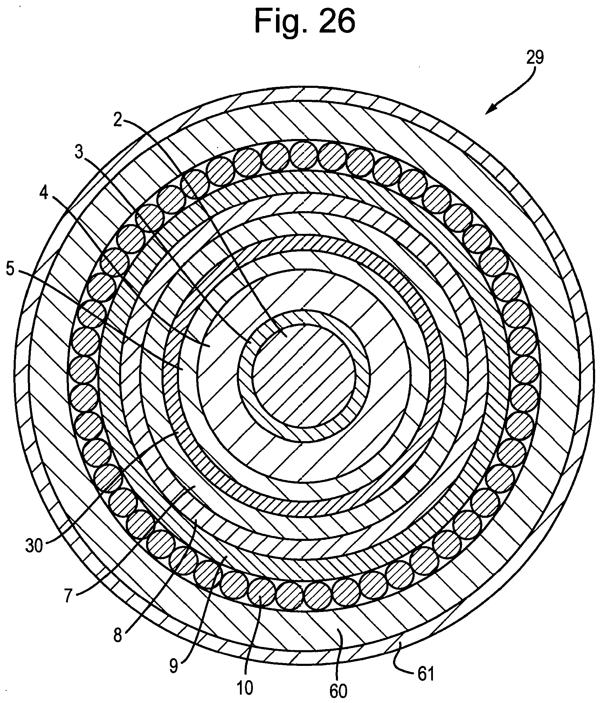

Figures 26, 27 and 28 show various embodiments of improved electric cable designs in accordance with the present invention. While only electric cables are shown, it will be appreciated that the present invention could be applied to any type of cable, including data communications cables.

Figure 26 shows a first embodiment of an improved single core electric cable 29. The single core electric cable 29 comprises an inner conductive core 2 made of copper. A series of concentric layers are disposed circumferentially around the conductive core 2. In order of the innermost layer, which is directly adjacent to the core 2, out to the external jacket layer 61, these layers comprise:- an inner semi-conductive layer 3, an insulating layer 4, an outer semi-conductive layer 5, a first self-healing layer 30, a lead sheath 7, an outer sheath 8, a bedding layer 9, and then a layer of galvanised steel wires 10.

In addition to these inner layers, as can be seen in Figure 26, a flexible controlled modulus layer 60 with self-healing capabilities surrounds the layer of steel wires 10, and acts as the compliant layer. Finally, a stiff controlled modulus jacket layer 61 surrounds layer 60 and acts as the tough layer.

In one embodiment, the bedding layer 9 is also configured to comprise a material with similar physical properties to the flexible controlled modulus compliant layer 60. This is beneficial as it provides an additional layer within the cable 29 which can act as a further shock-absorber.

The first self-healing layer 30 comprises water swelling TPEs (see Example 4), water swelling rubbers (see Example 7), SMPs (see Example 6), a supramolecular matrix (see Example 5), or any combination thereof. The first self-healing layer can also include a semi-conductive hydrophilic self-repair elastomer, such as a water swelling thermoplastic elastomer (TPE) compounded with a conductive material (such as graphite)..

As explained above, this will allow the first self-healing layer 30 to form stronger bonds with the outer semi-conductive layer. Additionally, as the first self-healing layer 30 comprises a water swelling thermoplastic elastomer (TPE) it will also act as a water-blocking layer.

The flexible controlled modulus compliant layer 60 comprises water swelling TPEs, water swelling rubbers, SMPs, a supramolecular matrix, or any combination thereof which possess the desired flexibility. The compliant layer 60 also includes a material selected from the table shown in Figure 7.

The stiff outer controlled modulus jacket layer 61 surrounds layer 60 and comprises a material selected from the table shown in Figure 8.

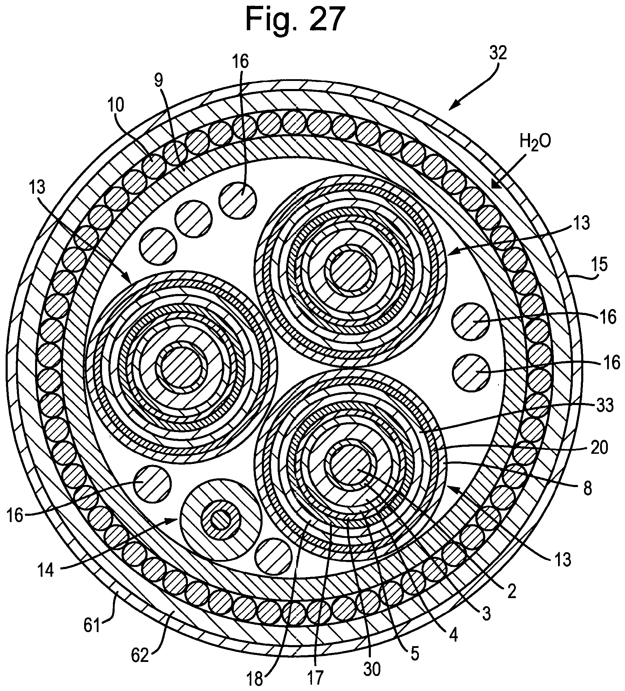

Referring now to Figure 27, there is shown a second embodiment of an improved triple core electric cable wet design 32. Similar to the triple core cable 12 used in the prior art shown in Figure 2, the improved triple core electric cable wet design 32 comprises three separate cable elements 13 and a fibre optic element 14 all of which are contained within an outer casing 15. Since the cable is wet design, water may penetrate the outer casing 15. The three cable elements 13 and the fibre optic element 14 are held in place by spaced apart filler elements 16. Each cable element 13 comprises a central conductive core 2 and a series of concentric layers which encase the conductive core 2, as explained below.

Adjacent the conductive core 2 there is disposed:- an inner semi-conductive layer 3, then an insulating layer 4, then an outer semi-conductive layer 5, then a first self-healing layer 30, then a copper counter helix 17, then a copper counter screen 18, then a third self-healing layer 33, then an aluminium tape layer 20 and finally an outer sheath 8. As with the improved single core electric cable 29, the first self-healing layer 30 in the second embodiment of the cable 32 consists of water swelling TPEs, water swelling rubbers, SMPs, a supramolecular matrix, or a combination thereof. Also, the first self-healing layer can comprise a semi-conductive hydrophilic self-repair elastomer, such as a water swelling thermoplastic elastomer (TPE) compounded with a conductive material (such as graphite).

The third self-healing layer 33 consists of water swelling TPEs, water swelling rubbers, SMPs, a supramolecular matrix or any combination thereof. Preferably, the third self-healing layer comprises water swelling TPEs.

The outer casing 15 includes an inner bedding layer 9, followed by a layer of galvanised steel wires 10, a flexible controlled modulus compliant layer 62 comprising open cell rubber or cellular foam and finally the stiff outer controlled modulus jacket layer 61. Unlike, in the previous embodiment, the flexible controlled modulus layer 62 does not possess self-healing capabilities. This is due the cable being wet design which means that the flexible controlled modulus layer 62 cannot comprise water swelling TPEs or water swelling rubbers. The flexible controlled modulus compliant layer 62 includes a material selected from the table shown in Figure 7 and the stiff outer controlled modulus jacket layer 61 includes a material selected from the table shown in Figure 8.

It will be understood that that due to its open cell structure, the mechanical properties of the flexible controlled modulus layer 62 will vary when the cable 32 is submerged in water (and the cells comprising the flexible controlled modulus layer 62 are therefore filled with water) to when the cable 32 is in a dry environment (and the cells comprising the flexible controlled modulus layer 62 are therefore filled with air). Water is largely incompressible compared to air, particularly as the pressure increases (which would be significant in subsea cables). Therefore, a compliant foam filled with water would be less able to compress and flex compared to the same material filled with air.

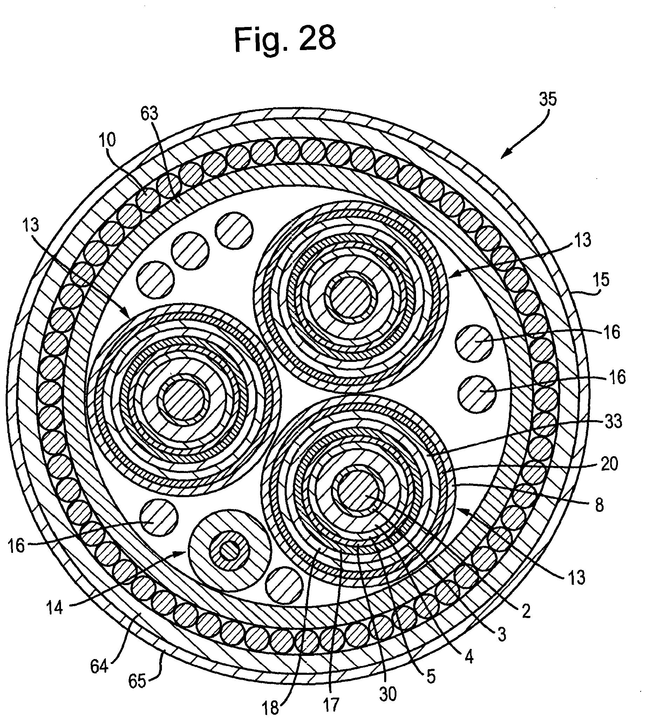

Finally, referring to Figure 28, there is shown a third embodiment of an improved triple core electric cable dry design 35. The improved triple core electric cable dry design 35 comprises three spaced apart cable elements 13 and a fibre optic element 14 all contained within an outer jacket casing 15. Since the cable 35 is dry design, water will not be able to penetrate the outer casing 15. The three cable elements 13 and the fibre optic element 14 are held in place by spaced apart filler 16. In the embodiment that is illustrated in Figure 28, each cable element 13 is identical to the cable elements provided in the triple core electric cable wet design 32 shown in Figure 27.

The outer casing 15 comprises a flexible controlled modulus bedding layer 63, a layer of galvanised steel wires 10, and a flexible controlled modulus layer 64 with self-healing capabilities and a stiff controlled modulus jacket layer 65 with self-healing capabilities.

In this embodiment the flexible controlled modulus bedding layer 63 includes a material similar to or selected from the table shown in Figure 7.

In this embodiment, the flexible controlled modulus layer 64 comprises water swelling TPEs or water swelling rubbers possessing the desired physical properties, and the stiff controlled modulus jacket layer 65 comprises a supramolecular matrix possessing the desired physical properties. Additionally, the flexible controlled modulus layer 64 and the stiff controlled modulus jacket layer 65 are physically attached to each other.

Accordingly, when no defects are present, the flexible controlled modulus layer 64 will not be exposed to water due to the presence of the stiff controlled modulus jacket layer 65. In the unlikely event that the stiff controlled modulus jacket layer 65 were to be damaged causing a defect to form in that layer then the flexible controlled modulus layer 64 would be exposed to water causing the water swelling TPEs or water swelling rubbers to swell and thereby closing the defect, drawing the stiff controlled modulus jacket layer 65 together, and enabling the supramolecular matrix to heal by reforming the labile bonds which were present before the defect was introduced. Investigations have shown that the two layers remain totally immiscible and non-bonding. Despite this, it has been shown that the first sub layer 36 can exert a force sufficient to bring two separate regions of the second sub layer 37 back together.

It will be understood that the materials which comprise the various layers which form the cables 29, 32, 35 of the invention will be selected to cause the layers to comprise processable peel strengths. Accordingly, the strength of bonding between adjacent layers will be strong enough that the layers will be incapable of relative movement in normal use. However, the strength of bonding will not be too great to prevent the layers from being peeled apart manually to aid in the maintenance of the cable.

Advantages of the cables 29, 32, 35 of the invention reside in the synergistic combination of the tough layer and the adjacent compliant layer the cable which may allow the cable be able to undergo rapid or slow mechanical deformation without defects forming. This effect is not only due to the strength of the tough layer, but also due to the compliant layer absorbing the energy of deformation due to its mechanical loss characteristics. Additionally, when a self-healing layer is provided, this may allow the cables to self-repair damage and prevent any defects which may form from propagating further. Additionally, since the materials which form the self-healing layer do not undergo any irreversible chemical reactions, the self-healing layer is capable of self-healing multiple times, and can therefore protect the core of the cable from repeated damage inflicted on the cable, which would otherwise eventually penetrate to the core and ultimately result in the failure of the cable.

Example 10: Thickness of the layers

It will be understood that the thickness of the tough layer and the compliant layer should be selected to ensure that the tough layer can effectively resist externally applied forces and transmit these to the compliant layer without fracturing and that the compliant layer can effectively redistribute due to deforming.

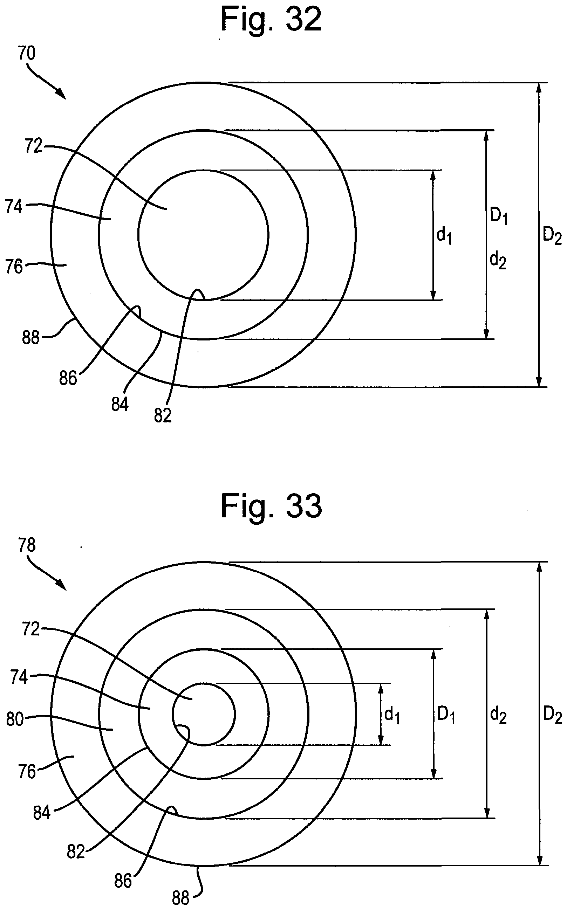

The thickness of the layers will vary depending on the properties of the materials which form the tough layer and the compliant layer. The inventors have devised a method of estimating the relative thickness of the two layers. The method is explained below, with reference to Figures 32 and 33.

Figure 32 shows a cable 70 comprising an inner section 72, a compliant layer 74 and a tough layer 76. Similarly, figure 33 shows a cable 78 which comprises an inner section 72, a compliant layer 74, a transition layer 80 and a tough layer 76.

It will be understood that the inner section 72 comprises everything that is surrounded by the compliant layer 74 and the cable 70 can be a single-core cable, similar to the cable 29 shown in Figure 26, or a multiple-core cable, similar to the cables 32, 35 shown in Figures 27 and 28.

As shown in figures 32 and 33, various measurements of the diameter are defined like so:

- $d_1$ is the inner diameter of the compliant layer 74, *i.e.* the diameter of the cable 70, 78 measured up to the internal surface 82 of the compliant layer 74. When the compliant layer 74 fits snuggly onto the inner section 72, then $d_1$ will be roughly equal to the diameter of the inner section 72;
- $D_1$ is the outer diameter of the compliant layer 74, *i.e.* the diameter of the cable 70, 78 measured up to the external surface 84 of the compliant layer 74;
- $d_2$ is the inner diameter of the tough layer 76, *i.e.* the diameter of the cable 70, 78 measured up to the internal surface 86 of the tough layer 76. When the cable does not comprise a transition layer, such as in the embodiment shown in figure 32, then D2 will be roughly equal to $d_1$; and
- D2 is the outer diameter of the tough layer 76, *i.e.* the diameter of the cable 70, 78 measured up to the external surface 88 of the compliant layer 76.

Accordingly, it will be understood that the thickness of the compliant layer 74 may be written as:

$$\text{Thickness of compliant layer} = D_1 - d_1$$

Similarly, the thickness of the tough layer 76 may be written as:

$$\text{Thickness of tough layer} = D_2 - d_2$$

The inventors have found that when:

$E_1$ is the Young's modulus of the compliant layer 74;
$E_2$ is the Young's modulus of the tough layer 76;
$\sigma_1$ is the maximum tensile stress of the compliant layer 74; and
$\sigma_2$ is the maximum tensile stress of the tough layer 76

then the following equation may be used:

$$E_1/E_2 \sim \sigma_1/\sigma_2 \sim [(D_2)^4 - (d_2)^4]/[(D_1)^4 - (d_1)^4]$$

Accordingly, if thickness of the inner section 72 and the desired total thickness of the cable are know, as well as the Young's modulus or maximum tensile stress for the materials that will form the compliant layer 74 and tough layer 76, then it will be possible to estimate the ratio of thicknesses of the compliant layer and tough layer.

Example 11: Manufacturing a cable

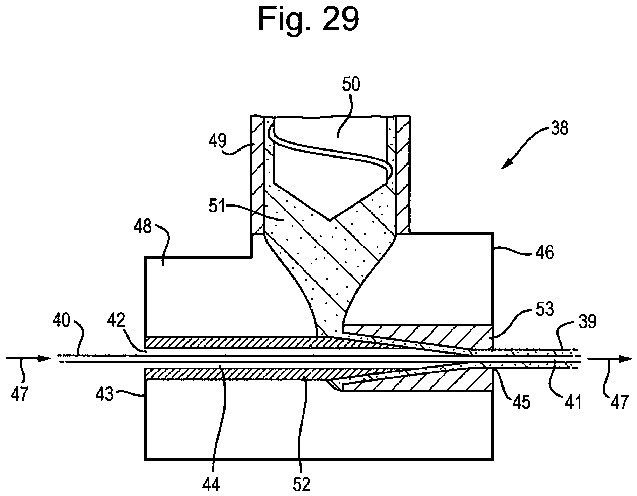

Another of the key advantages of the cables 29, 32, 35 described in Example 9 is that the layers may be extruded, and an apparatus 38 for adding a self-healing layer 39 to an inner portion 40 of a cable 41 is shown in Figure 29. The inner portion 40 of the cable comprises the conductive core 2, the inner semi-conductive layer 3, the insulating layer 4, and the outer semi-conductive layer 5.

The inner portion 40 of cable 41 is fed in a direction 47 into a slot 42 disposed in one side 43 of the apparatus 38. The inner portion 40 is then fed along direction 47 through a channel 44, which extends through a body 48 of the apparatus 38. The portion 40 ultimately exits body 48 through a slot 45 which is disposed in a second opposing side 46 of the apparatus 38.

Material which forms the desired layer 39 is fed into the apparatus 38 by means of a barrel 49 and screw 50 arrangement, which is disposed in an upper surface of the body 48. The material is initially melted, and then the melted material 51 is forced through the barrel 49, due to the action of the screw 50, into the main body 48 of the apparatus 38. Guiding strips 52 are disposed around the channel 44 and are provided to guide the melted material 51 around the channel 44. The thickness of the guiding strips decrease (or taper inwardly) closer to the second side 46 of the apparatus 38 such that, as the melted material 51 moves in direction 47 through the body 48, it is forced towards and around the inner portion 40.

A forming die 53 is disposed adjacent to the second slot 45 of the apparatus 38. As the melted material 51 is forced out of the second slot 45, the forming die 53 ensures it encompasses the inner portion 40 and possesses the desired thickness. As the melted material 51 is forced out of the second slot 45, it comes into contact with cooling air causing the melted material 51 to solidify, thereby forming the desired layer 39 around the inner portion 40. It will be appreciated that additional layers could be added to the cable 41, as desired.

As explained above, in some embodiments the cable may comprise a layer of cellular foam 34. This layer 34 may also be extruded, either with a gas forming additive or in an extrusion process which carries the gas itself.

Advantages of the apparatus 38 and method described above, which uses extrusion to manufacture cables, is that it allows a manufacturer to easily create cables having a complex cross-section. Such a method would not have been possible for manufacturing the prior art cables, which would be much more labour intensive to manufacture resulting in the methods of manufacture being more time consuming, more costly and more prone to errors.

References

1. Ning, Fanglin, et al. "Synthesis of amphiphilic block-graft copolymers [poly (styrene - b - ethylene - co - butylene - b - styrene) - g - poly (acrylic acid)] and their aggregation in water." Journal of Polymer Science PartA: Polymer Chemistry 40.9 (2002): 1253-1266.

2. Licari, J.J. Enlow, L.R. (1998). Hybrid Microcircuit Technology Handbook (2nd Edition). William Andrew Publishing/Noyes.

3. Koleske, Joseph V. (2012). Paint and Coating Testing Manual - Fifteenth Edition of the Gardner-Sward Handbook: (MNL 17-2nd). ASTM International.

4. Durmaz, S., and O. Okay. "Acrylamide/2-acrylamido-2-methylpropane sulfonic acid sodium salt-based hydrogels: synthesis and characterization." Polymer41.10 (2000): 3693-3704.

5. "Self-Healing Polymers via Supramolecular Forces", Florian Herbst, Diana Döhler, Philipp Michael, Wolfgang H. Binder, Macromolecular Rapid Communications, for publish 2013

6. W. M. Huang, B. Yang, Y. Zhao and Z. Ding: Thermo-moisture responsive polyurethane shape-memory polymer and composites: a review, J. Mater. Chem., 2010,20, 3367-3381

7. W. M. Huang, B. Yang, Y. Zhao and Z. Ding: Thermo-moisture responsive polyurethane shape-memory polymer and composites: a review, J. Mater. Chem., 2010,20, 3367-3381

8. Dan Yang, Wei Huang, Jiahui Yu, Jisen Jiang, Liya Zhang, Meiran Xie, A novel shape memory polynorbornene functionalized with poly($\varepsilon$-caprolactone) side chain and cyano group through ring-opening metathesis polymerization, Polymer, Volume 51, Issue 22,15 October 2010, Pages 5100-5106

9. Reyntjens, Wouter G., Filip E. Du Prez, and Eric J. Goethals. "Polymer networks containing crystallizable poly (octadecyl vinyl ether) segments for shape - memory materials." Macromolecular rapid communications 20.5 (1999): 251-255.

10. Luo, Xiaolie, et al. "Thermally stimulated shape - memory behavior of ethylene oxide - ethylene terephthalate segmented copolymer." Journal of applied polymer science 64.12 (1997): 2433-2440.

11. Lee, Bo Sun, et al. "Structure and thermomechanical properties of polyurethane block copolymers with shape memory effect." Macromolecules 34.18 (2001): 6431-6437.

**Claims**

1. An electrical power cable (29, 32, 35) comprising:

   a core (2) comprising a conductive material; and
   a resilient external layer surrounding the core, wherein the resilient external layer comprises:

      a compliant layer (60, 64) having a shear loss modulus of at least 0.3 MPa at 296 K; and
      a tough layer (61, 65), disposed surrounding the compliant layer (60, 64), wherein the tough layer (61, 65) has a fracture toughness of at least 1 MPa m$^{1/2}$ at 296 K,

   **characterised in that** the cable (29, 32, 35) comprises a self-healing layer extruded around and surrounding the core (2).

2. The electrical power cable (29, 32, 35) according to claim 1, wherein the tough layer (61, 65) is a self-healing layer and/or the compliant layer (60, 64) is a self-healing layer.

3. The electrical power cable (29, 32, 35) according to claim 1, wherein the self-healing layer comprises a separate layer to the resilient and compliant layers.

4. The electrical power cable (29, 32, 35) according to any preceding claim, wherein the self-healing layer comprises a supramolecular polymer.

5. The electrical power cable (29, 32, 35) according to any preceding claim, wherein the self-healing layer comprises a shape-memory polymer.

6. The electrical power cable (29, 32, 35) according to any preceding claim, wherein the tough layer (61, 65) has:

   - a Shore D hardness of at least 60 at 296 K; and/or
   - a tensile modulus of at least 200 MPa at 296 K.

7. The electrical power cable (29, 32, 35) according to any preceding claim 3, wherein the tough layer (61, 65) has:

   - a bulk modulus of at least 300 MPa at 296 K;
   - a shear modulus of at least 5 MPa at 296 K;
   - a fracture toughness of at least 2 MPa m$^{1/2}$ at 296 K; and/or
   - a bulk compliance of less than 0.07 MPa$^{-1}$ at 296 K.

8. The electrical power cable (29, 32, 35) according to any preceding claim, wherein the compliant layer (60, 64) has:

   - a Shore D hardness of less than 50 at 296 K; and/or
   - Shore A hardness of 100 or less at 296 K.

9. The electrical power cable (29, 32, 35) according to any preceding claim, wherein the compliant layer (60, 64) has:

   - a tensile modulus of 500 MPa or less at 296 K;
   - a bulk modulus of 3000 MPa or less at 296 K;
   - a shear modulus of 200 MPa or less at 296 K;
   - a shear loss modulus of at least 0.4 MPa at 296 K; and/or

- a bulk compliance of at least 0.0001 MPa$^{-1}$ at 296 K.

10. The electrical power cable (29, 32, 35) according to any preceding claim, wherein the compliant layer (60, 64) is disposed adjacent to and bonded to the tough layer (61, 65), or the tough layer (61, 65) is disposed adjacent to and surrounds the compliant layer (60, 64) and the tough layer (61, 65) is not bonded to the compliant layer (60, 64).

11. The electrical power cable (29, 32, 35) according to any one of claims 1 to 9, wherein a transition layer is disposed between the tough layer (61, 65) and the compliant layer (60, 64), the transition layer being disposed adjacent to and surrounding the compliant layer (60, 64), and the tough layer (61, 65) is disposed adjacent to and surrounds the transition layer.

12. The electrical power cable (29, 32, 35) according to any preceding claim, wherein the tough layer (61, 65) comprises a thermoplastic material.

13. The electrical power cable (29, 32, 35) according to any preceding claim, wherein the resilient external layer forms a dry composite structure, which is configured not to allow water to pass therethrough.

14. The electrical power cable (29, 32, 35) according to any one of claims 1 to 12, wherein the resilient external layer forms a wet composite structure, which is configured to allow water to pass therethrough.

15. A method for manufacturing an electrical power cable (29, 32, 35) according to any one of claims 1 to 14, the method comprising:

a) extruding compliant material to form a compliant layer (60, 64) around an inner portion (40) of a cable (29, 32, 35); and
b) extruding resilient material to form a tough layer (61, 65) around the compliant layer (60, 64);

wherein the tough layer (61, 65) has a fracture toughness of at least 1 MPa m$^{1/2}$ at 296 K, and the compliant layer (60, 64) has a shear loss modulus of at least 0.3 MPa at 296 K; **characterised in that** the cable (29, 32, 35) comprises a self-healing layer extruded around and surrounding the core (2).

**Patentansprüche**

1. Elektrisches Stromkabel (29, 32, 35), umfassend:

einen Kern (2), der ein leitendes Material umfasst; und
eine elastische äußere Schicht, die den Kern umgibt, wobei die elastische äußere Schicht Folgendes umfasst:

eine nachgiebige Schicht (60, 64), die ein Scherverlustmodul von zumindest 0,3 MPa bei 296 K aufweist; und
eine harte Schicht (61, 65), die um die nachgiebige Schicht (60, 64) herum angeordnet ist, wobei die harte Schicht (61, 65) eine Bruchzähigkeit von zumindest 1 MPa m$^{1/2}$ bei 296 K aufweist,
**dadurch gekennzeichnet, dass** das Kabel (29, 32, 35) eine selbstheilende Schicht umfasst, die um den Kern (2) herum extrudiert ist und diesen umgibt.

2. Elektrisches Stromkabel (29, 32, 35) nach Anspruch 1, wobei die harte Schicht (61, 65) eine selbstheilende Schicht ist und/oder die nachgiebige Schicht (60, 64) eine selbstheilende Schicht ist.

3. Elektrisches Stromkabel (29, 32, 35) nach Anspruch 1, wobei die selbstheilende Schicht eine separate Schicht zu der elastischen und der nachgiebigen Schicht umfasst.

4. Elektrisches Stromkabel (29, 32, 35) nach einem vorhergehenden Anspruch, wobei die selbstheilende Schicht ein supramolekulares Polymer umfasst.

5. Elektrisches Stromkabel (29, 32, 35) nach einem vorhergehenden Anspruch, wobei die selbstheilende Schicht ein Formgedächtnispolymer umfasst.

6. Elektrisches Stromkabel (29, 32, 35) nach einem vorhergehenden Anspruch, wobei die harte Schicht (61, 65) Folgendes aufweist:

- eine Shore-D-Härte von zumindest 60 bei 296 K; und/oder
- ein Zugmodul von zumindest 200 MPa bei 296 K.

7. Elektrisches Stromkabel (29, 32, 35) nach einem vorhergehenden Anspruch 3, wobei die harte Schicht (61, 65) Folgendes aufweist:

- ein Volumenmodul von zumindest 300 MPa bei 296 K;
- ein Schermodul von zumindest 5 MPa bei 296 K;
- eine Bruchzähigkeit von zumindest 2 MPa m$^{1/2}$ bei 296 K; und/oder
- eine Massenkonformität von weniger als 0,07 MPa$^{-1}$ bei 296 K.

8. Elektrisches Stromkabel (29, 32, 35) nach einem vorhergehenden Anspruch, wobei die nachgiebige Schicht (60, 64) Folgendes aufweist:

- eine Shore-D-Härte von weniger als 50 bei 296 K; und/oder
- Shore-A-Härte von 100 oder weniger bei 296 K.

9. Elektrisches Stromkabel (29, 32, 35) nach einem vorhergehenden Anspruch, wobei die nachgiebige Schicht (60, 64) Folgendes aufweist:

- ein Zugmodul von 500 MPa oder weniger bei 296 K;
- ein Volumenmodul von 3000 MPa oder weniger bei 296 K;
- ein Schermodul von 200 MPa oder weniger bei 296 K;
- ein Scherverlustmodul von zumindest 0,4 MPa bei 296 K; und/oder
- eine Massenkonformität von zumindest 0,0001 MPa$^{-1}$ bei 296 K.

10. Elektrisches Stromkabel (29, 32, 35) nach einem vorhergehenden Anspruch, wobei die nachgiebige Schicht (60, 64) benachbart zu der harten Schicht (61, 65) und an diese gebunden angeordnet ist, oder die harte Schicht (61, 65) benachbart zu der nachgiebigen Schicht (60, 64) angeordnet ist und diese umgibt, und die harte Schicht (61, 65) nicht an die nachgiebige Schicht (60, 64) gebunden ist.

11. Elektrisches Stromkabel (29, 32, 35) nach einem der Ansprüche 1 bis 9, wobei eine Übergangsschicht zwischen der harten Schicht (61, 65) und der nachgiebigen Schicht (60, 64) angeordnet ist, wobei die Übergangsschicht benachbart zu der nachgiebigen Schicht (60, 64) angeordnet ist und diese umgibt, und die harte Schicht (61, 65) benachbart zu der Übergangsschicht angeordnet ist und diese umgibt.

12. Elektrisches Stromkabel (29, 32, 35) nach einem vorhergehenden Anspruch, wobei die harte Schicht (61, 65) ein thermoplastisches Material umfasst.

13. Elektrisches Stromkabel (29, 32, 35) nach einem vorhergehenden Anspruch, wobei die elastische äußere Schicht eine trockene Verbundstruktur bildet, die konfiguriert ist, um nicht zu erlauben, dass Wasser dort hindurchtritt.

14. Elektrisches Stromkabel (29, 32, 35) nach einem der Ansprüche 1 bis 12, wobei die elastische äußere Schicht eine feuchte Verbundstruktur bildet, die konfiguriert ist, um zu erlauben, dass Wasser dort hindurchtritt.

15. Verfahren zur Herstellung eines elektrischen Stromkabels (29, 32, 35) nach einem der Ansprüche 1 bis 14, wobei das Verfahren Folgendes umfasst:

a) Extrudieren von nachgiebigem Material, um eine nachgiebige Schicht (60, 64) um einen inneren Abschnitt (40) eines Kabels (29, 32, 35) zu bilden; und
b) Extrudieren von elastischem Material, um eine harte Schicht (61, 65) um die nachgiebige Schicht (60, 64) zu bilden;

wobei die harte Schicht (61, 65) eine Bruchzähigkeit von zumindest 1 MPa m$^{1/2}$ bei 296 K aufweist, und die nachgiebige Schicht (60, 64) ein Scherverlustmodul von zumindest 0,3 MPa bei 296 K aufweist; **dadurch gekennzeichnet, dass** das Kabel (29, 32, 35) eine selbstheilende Schicht umfasst, die um den Kern (2) herum extrudiert ist und diesen umgibt.

**Revendications**

1. Câble d'alimentation électrique (29, 32, 35) comprenant :

   une âme (2) comprenant un matériau conducteur ; et
   une couche externe élastique entourant l'âme, ladite couche externe élastique comprenant :

   une couche souple (60, 64) possédant un module de perte en cisaillement supérieur ou égal à 0,3 MPa à 296 K ; et
   une couche dure (61, 65), disposée tout autour de la couche souple (60, 64), ladite couche dure (61, 65) possédant une ténacité supérieure ou égale à 1 MPa m$^{1/2}$ à 296 K,
   **caractérisé en ce que** le câble (29, 32, 35)
   comprend une couche auto-cicatrisante extrudée autour de l'âme (2) et enveloppant celle-ci.

2. Câble d'alimentation électrique (29, 32, 35) selon la revendication 1, ladite couche dure (61, 65) étant une couche auto-cicatrisante et/ou la couche souple (60, 64) étant une couche auto-cicatrisante.

3. Câble d'alimentation électrique (29, 32, 35) selon la revendication 1, ladite couche auto-cicatrisante comprenant une couche séparée par rapport aux couches élastique et souple.

4. Câble d'alimentation électrique (29, 32, 35) selon une quelconque revendication précédente, ladite couche auto-cicatrisante comprenant un polymère supramoléculaire.

5. Câble d'alimentation électrique (29, 32, 35) selon une quelconque revendication précédente, ladite couche auto-cicatrisante comprenant un polymère à mémoire de forme.

6. Câble d'alimentation électrique (29, 32, 35) selon une quelconque revendication précédente, ladite couche dure (61, 65) possédant :

   une dureté Shore D supérieure ou égale à 60 à 296 K ; et/ou
   un module de traction supérieure ou égale à 200 MPa à 296 K.

7. Câble d'alimentation électrique (29, 32, 35) selon une quelconque revendication précédente 3, ladite couche dure (61, 65) possédant :

   un module d'élasticité isostatique supérieur ou égal à 300 MPa à 296 K ;
   un module de cisaillement supérieur ou égal à 5 MPa à 296 K ;
   une ténacité supérieure ou égale à 2 MPa m$^{1/2}$ à 296 K ; et/ou
   une complaisance de compressibilité inférieure à 0,07 MPa$^{-1}$ à 296 K.

8. Câble d'alimentation électrique (29, 32, 35) selon une quelconque revendication précédente, ladite couche souple (60, 64) possédant :

   une dureté Shore D inférieure à 50 à 296 K ; et/ou
   une dureté Shore A inférieure ou égale à 100 à 296 K.

9. Câble d'alimentation électrique (29, 32, 35) selon une quelconque revendication précédente, ladite couche souple (60, 64) possédant :

   un module de traction inférieur ou égal à 500 MPa à 296 K ;
   un module d'élasticité isostatique inférieur ou égal à 3000 MPa à 296 K ;
   un module de cisaillement inférieur ou égal à 200 MPa à 296 K ;
   un module de perte en cisaillement supérieur ou égal à 0,4 MPa à 296 K ; et/ou
   une complaisance de compressibilité supérieure ou égale à 0,0001 MPa$^{-1}$ à 296 K.

**10.** Câble d'alimentation électrique (29, 32, 35) selon une quelconque revendication précédente, ladite couche souple (60, 64) étant disposée adjacente à la couche dure (61, 65) et liée à celle-ci, ou ladite couche dure (61, 65) étant disposée adjacente à la couche souple (60, 64) et enveloppant celle-ci et ladite couche dure (61, 65) n'étant pas liée à la couche souple (60, 64).

**11.** Câble d'alimentation électrique (29, 32, 35) selon l'une quelconque des revendications 1 à 9, une couche de transition étant disposée entre la couche dure (61, 65) et la couche souple (60, 64), la couche de transition étant disposée adjacente à la couche souple (60, 64) et enveloppant celle-ci, et ladite couche dure (61, 65) étant disposée adjacente à la couche de transition et entourant celle-ci.

**12.** Câble d'alimentation électrique (29, 32, 35) selon une quelconque revendication précédente, ladite couche dure (61, 65) comprenant un matériau thermoplastique.

**13.** Câble d'alimentation électrique (29, 32, 35) selon une quelconque revendication précédente, ladite couche externe élastique formant une structure composite sèche, qui est conçue pour ne pas permettre à l'eau de la traverser.

**14.** Câble d'alimentation électrique (29, 32, 35) selon l'une quelconque des revendications 1 à 12, ladite couche externe élastique formant une structure composite humide, qui est conçue pour permettre à l'eau de la traverser.

**15.** Procédé permettant la fabrication d'un câble d'alimentation électrique (29, 32, 35) selon l'une quelconque des revendications 1 à 14, le procédé comprenant :

a) l'extrusion d'un matériau souple pour former une couche souple (60, 64) autour d'une partie interne (40) d'un câble (29, 32, 35) ; et
b) l'extrusion d'un matériau élastique pour former une couche dure (61, 65) autour de la couche souple (60, 64) ;

ladite couche dure (61, 65) possédant une ténacité supérieure ou égale à 1 MPa m$^{1/2}$ à 296 K, et ladite couche souple (60, 64) possédant un module de perte en cisaillement supérieur ou égal à 0,3 MPa à 296 K ; **caractérisé en ce que** le câble (29, 32, 35) comprend une couche auto-cicatrisante extrudée autour de l'âme (2) et enveloppant celle-ci.

# Fig. 1

# Fig. 2

# Fig. 3

Fig. 4a

Fig. 4b

## Fig. 5

## Fig. 6

# Fig. 7

| | Temperature (K) | Tensile modulus (MPa) | Poisson's ratio | Bulk modulus (K) (MPa) | Bulk compliance (MPa$^{-1}$) | Shear modulus (G) (MPa) | Shear loss modulus | Shear compliance (MPa$^{-1}$) | Hardness (Shore A) | Hardness (Shore D) |
|---|---|---|---|---|---|---|---|---|---|---|
| Vamac® ethylene acrylic elastomer | 253 | 345.432 | 0.48 | 2878.6 | 0.000347 | 116.7 | 0.6 | 0.00857 | 50-90 | |
| | 273 | 79.032 | 0.48 | 658.6 | 0.001518 | 26.7 | 0.7 | 0.0375 | | |
| | 293 | 29.6 | 0.48 | 246.77 | 0.004054 | 10 | 0.4 | 0.1 | | |
| | 313 | 19.832 | 0.48 | 165.3 | 0.00605 | 6.7 | 0.3 | 0.1493 | | |
| Therban® | 273 | 3-20 | 0.48 | 25-166.7 | 0.04-0.06 | 1.014-6.76 | | 0.986-0.148 | 30-95 | |
| Hytemp® | | 11.5 | 0.48 | 95.94 | 0.01042 | 3.89 | | 0.257 | 50-80 | |
| Desmopan® | 253 | 450-2340 | 0.48 | 3750-19500 | 0.0002-5.12×10$^{-5}$ | 152-790.5 | | 0.007-0.001 | 100 | 50 |
| | 293 | 93-298 | | 775-2483 | 0.0013-0.0004 | 31.42-100.7 | | 0.032-0.01 | | |
| | 333 | 48-121 | | 400-1008 | 0.0025-0.001 | 16.22-40.88 | | 0.062-0.024 | | |
| Thermoset polyurethane | 273 | 0.186-284.75 | 0.48 | 1.55-2373 | 0.65-0.0004 | 0.063-96.2 | | 15.87-0.010 | 59-95 | |
| Silastic® | | 0.8957-5.37 | 0.48 | 7.464-44.75 | 0.13-0.022 | 0.303-1.814 | | 3.300-0.551 | 20-70 | |
| Aflas® | | 1.30-18.0 | 0.48 | 10.83-150 | 0.923-0.007 | 0.439-6.081 | | 2.278-0.164 | 69 | |
| Viton® | | 4.79 | 0.47 | 26.61 | 0.0375799 | 1.629 | | 0.6139 | 60-95 | |
| Technoflon® | | 7.6 (@ 100%) | 0.47 | 42.22 | 0.0236855 | 2.585 | | 0.3868 | 74 | |

EP 3 259 764 B1

# Fig. 8

| | Temperature (K) | Tensile modulus (MPa) | Poisson's ratio | Bulk modulus (K) (MPa) | Bulk compliance (MPa$^{-1}$) | Shear modulus (G) (MPa) | Shear loss modulus | Shear compliance (MPa$^{-1}$) | Hardness (Shore D) |
|---|---|---|---|---|---|---|---|---|---|
| HDPE | 296 | 1000 | 0.46 | 4166.7 | 0.00024 | 556.5 (313 K) | | 0.001797 | 67 |
| | | | | | | 254.5 (353K) | | 0.00393 | |
| PP | 273 | 5310-1-400 | 0.46 | 22125-43333 | 4.519x10$^{-5}$-2.308x10$^{-5}$ | 1017 | 0.064 | 0.000983 | 78 |
| | 313 | | | | | 407 | 0.049 | 0.002457 | |
| | 353 | | | | | 165 | 0.082 | 0.00606 | |
| | 393 | | | | | 75 | 0.093 | 0.01333 | |
| Poly(oxymethylene) | | 8494 | 0.37 | 11487-12808 | 8.7x10$^{-5}$-7.8x10$^{-5}$ | 3100 | | 0.0003226 | 86 |
| Hytrel® 8238 | 296 | 1180 | 0.45 | 3933 | 0.006-0.0005 | 406.9 | | 0.058-0.005 | 74 |
| IROGRAN® D 60 E4024 | | 22 (@ 100% strain) | 0.49 | 366.67 | 0.0667 | 7.38 | | 0.1355 | 60 |

EP 3 259 764 B1

# Fig. 9

# Fig. 10

# Fig. 11

# Fig. 12

# Fig. 13

# Fig. 14

# Fig. 15

## Fig. 16

## Fig. 17a

## Fig. 17b

# Fig. 18

# Fig. 19

H-[O-(CH$_2$) $_5$ -CO-]$_n$-O-R————— OOCHN-R'-NHCOO-R''-OOCHN-R'

(Soft segment, polyol)          (Hard segment, diisocyanate + extender)

# Fig. 20

# Fig. 21

# Fig. 22

## Fig. 23

Polyurethane

## Fig. 24

## Fig. 25a

## Fig. 25b

## Fig. 25c

# Fig. 26

# Fig. 27

# Fig. 28

# Fig. 29

# Fig. 30

$$-(CH_2-CH)_{l-x}(CH_2-CH)_x(CH-CH_2)_{ml}(CH-CH)_{m2}(CH_2-CH)_x(CH_2-CH)_{l-x}-$$

CISEBS

# Fig. 31

# Fig. 32

# Fig. 33

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015014386 A
- US 3710007 A

### Non-patent literature cited in the description

- **NING, FANGLIN et al.** Synthesis of amphiphilic block-graft copolymers [poly (styrene - b - ethylene - co - butylene - b - styrene) - g - poly (acrylic acid)] and their aggregation in water. *Journal of Polymer Science PartA: Polymer Chemistry,* 2002, vol. 40.9, 1253-1266
- **LICARI, J.J. ; ENLOW, L.R.** Hybrid Microcircuit Technology Handbook. William Andrew Publishing/Noyes, 1998
- Paint and Coating Testing Manual. **KOLESKE, JOSEPH V.** Gardner-Sward Handbook. ASTM International, 2012
- **DURMAZ, S. ; O. OKAY.** Acrylamide/2-acrylamido-2-methylpropane sulfonic acid sodium salt-based hydrogels: synthesis and characterization. *Polymer,* 2000, vol. 41.10, 3693-3704
- **FLORIAN HERBST ; DIANA DÖHLER ; PHILIPP MICHAEL ; WOLFGANG H. BINDER.** Self-Healing Polymers via Supramolecular Forces. *Macromolecular Rapid Communications,* 2013
- **W. M. HUANG ; B. YANG ; Y. ZHAO ; Z. DING.** Thermo-moisture responsive polyurethane shape-memory polymer and composites: a review. *J. Mater. Chem.,* 2010, vol. 20, 3367-3381
- **DAN YANG ; WEI HUANG ; JIAHUI YU ; JISEN JIANG ; LIYA ZHANG ; MEIRAN XIE.** A novel shape memory polynorbornene functionalized with poly($\varepsilon$-caprolactone) side chain and cyano group through ring-opening metathesis polymerization. *Polymer,* 15 October 2010, vol. 51 (22), 5100-5106
- **REYNTJENS, WOUTER G. ; FILIP E. DU PREZ ; ERIC J. GOETHALS.** Polymer networks containing crystallizable poly (octadecyl vinyl ether) segments for shape - memory materials. *Macromolecular rapid communications,* 1999, vol. 20.5, 251-255
- **LUO, XIAOLIE et al.** Thermally stimulated shape - memory behavior of ethylene oxide - ethylene terephthalate segmented copolymer. *Journal of applied polymer science,* 1997, vol. 64.12, 2433-2440
- **LEE, BO SUN et al.** Structure and thermomechanical properties of polyurethane block copolymers with shape memory effect. *Macromolecules,* 2001, vol. 34.18, 6431-6437